# EUROPEAN PATENT APPLICATION

(11) **EP 4 579 828 A1**
(43) Date of publication of application: **02.07.2025**
(21) Application number: 23220859.5
(22) Date of filing: 29.12.2023
(51) Int. Cl.: H01M 8/04313, H01M 8/04537, H01M 8/04858, H01M 8/249

(54) **SYSTEM AND METHOD FOR OPERATING A FUEL CELL SYSTEM COMPRISING A PLURALITY OF MODULES**

(71) Applicant: VOLVO TRUCK CORPORATION, 405 08 Göteborg (SE)
(72) Inventor: HINDI, Gustavo, 449 50 Alafors (SE); BLOMGREN, Fredrik, 425 35 Kärra (SE); HABERL, Felix, 417 41 Göteborg (SE); HUTTUNEN, Marcus, 417 55 Göteborg (SE)
(74) Representative: Valea AB

(57) **Abstract**

A system and method for controlling operation of a fuel cell system for a vehicle are provided. The fuel cell system comprises a fuel cell unit comprising a plurality of fuel cell stacks and an electrical circuit arranged to selectively connect the fuel cells stacks to a load. A control system comprises processing circuitry that is configured to obtain an actual or predicted value of requested power output that is requested from the fuel cell system; monitor a State of Health (SoH) of each of the plurality of fuel cell stacks; when the value of the requested power output is below a first threshold power level and at least two stacks out of the plurality of stacks are currently active, deactivate at least one first stack from the at least two currently active fuel cell stacks in an order of increasing SoH; and, when the value of the requested power output is above a second threshold power level, activate at least one second stack from the plurality of fuel cell stacks in an order of decreasing SoH.

## Description

### TECHNICAL FIELD

The disclosure relates generally to operating a fuel cell system in dependance on a power demand on the fuel cell system, by activating and deactivating fuel cell stacks of the fuel cell system.

The disclosure can be applied in heavy-duty vehicles, such as trucks, buses, and construction equipment, as well as in gensets.

### BACKGROUND

A fuel cell is an electrochemical device that includes an electrolyte sandwiched between two electrodes such as an anode and a cathode. Solid polymer electrolyte fuel cells, which employ a proton exchange membrane (PEM), generate electric power or energy via electrochemical reaction between fuel, such as hydrogen gas received at the anode or anode side, and oxidant, such as oxygen or air received at the cathode or cathode side. PEM fuel cells are considered well suitable for vehicular applications as well as for stationary applications employing fuel cell systems. Two or more, in some cases several hundreds, fuel cells may be arranged together into a fuel cell stack, in order to provide a higher output voltage. One or more fuel cell stacks may be arranged to form a fuel cell unit. A fuel cell system may include one or more fuel cell units.

In fuel cells, metals such as e.g. palladium and platinum are used as catalysts to promote the electrochemical reaction between the hydrogen gas and the oxidizing gas, wherein the reaction occurs across the membrane or electrolyte. A supporting structure made of a catalyst support material, such as e.g. carbon, is configured to support the membrane and catalyst and the metal catalysts are typically used on the catalyst support material. The condition of the catalysts and the support material defines durability, lifetime, and performance of the fuel cell system. The catalysts need to operate within certain conditions to result in effective reaction rates. Thus, an excessive increase in a single cell voltage may lead to degradation of the catalyst and support material, wherein the single cell voltage can be defined as a voltage that each of the cells in a fuel cell stack are providing and/or operating. Accordingly, during operation of the fuel cell system, it is desirable to maintain the single cell voltage, also referred to as a cell potential, below a certain voltage level.

In fuel cell systems with higher power which are gaining increasing attention in automotive and other areas, there is an issue that arises at low loads on a fuel cell system. In particular, the single cell potential can reach a safe threshold at a higher power of the fuel cell system. In this way, the excess power may be generated which is wasted whereby efficiency of the fuel cell system is decreased. Moreover, as the power of the fuel cell system decreases, the single cell potential increases to values that negatively affect the condition of the catalyst and carbon support material. Accordingly, it may be challenging to control the fuel cell system at lower loads in a manner that takes into consideration potential degradation of the catalysts and the support material.

Various methods have been proposed for operating a fuel cell system at decreased power demands from the fuel cell system, and as the power demands increases. However, there remains a need for improved methods for controlling operation of the fuel cell system in a manner than reduces a single cell potential.

### SUMMARY

Aspects of the present disclosure relate to control of a fuel cell system in dependance on a load i.e. power demand on the fuel cell system. The fuel cell system may be deployed in a fuel cell vehicle. In some examples, the fuel cell system may be for a stationary application.

The fuel cell system, which comprises one or more fuel cell units each comprising a plurality of fuel cell stacks, is configured to operate or be operated such that the stacks can be deactivated or activated in dependence on a value of a power output that is requested from the fuel cell system, wherein the value of the requested power output may be a value of a predicted or actual power output. When a load or power demand on the fuel cell system decreases and the value of the requested power output is e.g., below a first threshold power level, the stacks may be deactivated sequentially, one or more at a time. The stacks may be deactivated in an order of increasing state of health (SoH) of the stacks, such that stacks with a lower SoH are deactivated before stacks with a higher SoH are deactivated.

The deactivation of the stacks in the manner as described herein may advantageously allow limiting the single cell voltage or potential to values lower than 0.8V. This allows avoiding degradation of the catalysts and the support material. Moreover, a risk of degradation per stack is balanced. A stack is deactivated by disconnecting that stack from an electrical circuit that delivers power or energy generated by the stack to an application configured to consume the power, e.g., a fuel cell vehicle or another device or system. A flow of air or oxygen and a flow of hydrogen gas to the stack may be blocked, which in some implementations may involve bypassing the stack. Also, in some examples, a flow of coolant to the stack may be blocked when the stack is deactivated.

When the power demand on the fuel cell system increases and the value of the requested power output is e.g. above the first threshold power level, the stacks, which were previously deactivated, may be activated sequentially, one or more at a time, in accordance with examples of the present disclosure The stacks may be activated in an order of decreasing SoH of the stacks, such that stacks with a higher SoH are activated before stacks with a lower SoH are activated. A stack may be activated by connecting that stack to the electrical circuit. A flow of air or oxygen and a flow of hydrogen gas to the stack may be unblocked or otherwise allowed to be supplied to the stack being activated. Also, in some examples, a flow of coolant to the stack may be unblocked when the stack is activated. The stacks may thus be activated sequentially as higher powers are required by the fuel cell system, in a manner that balances the degradation and lifetime of all of the fuel cell stacks in a fuel cell unit of the fuel cell system.

In an aspect, a fuel cell system for a fuel cell vehicle is provided. The fuel cell system comprises a fuel cell unit, an electrical circuit, and a control system. The fuel cell unit comprises a plurality of fuel cell stacks, a fuel cell stack from the plurality of fuel cell stacks comprising a cathode and an anode, a cathode feed line configured to supply an air flow to the cathode, a cathode output line configured to provide a cathode output flow from the cathode, an anode feed line configured to supply a hydrogen gas flow to the anode, an anode output line configured to provide an anode output flow from the anode, a coolant feed line configured to supply a coolant flow to the fuel cell stack, and a coolant output line configured to provide a coolant output flow from the fuel cell stack. The electrical circuit is arranged to selectively connect the fuel cells stacks to a load, wherein the fuel cell stack is configured to be electrically coupled to all other fuel cell stacks from the plurality of fuel cell stacks. The control system is configured to control operation of the fuel cell unit and comprises processing circuitry that is configured to: obtain an actual or predicted value of requested power output that is requested from the fuel cell system; monitor a State of Health (SoH) of each of the plurality of fuel cell stacks; responsive to determining that the value of the requested power output is below a first threshold power level and that a power demand on the fuel cell system decreases, when at least two fuel cell stacks out of the plurality of stacks are currently active, deactivate at least one first fuel cell stack from the at least two currently active fuel cell stacks in an order of increasing SoH and in dependence on the value of the requested power output; and responsive to determining that the value of the requested power output is above a second threshold power level that is greater than the first threshold power level, and that the power demand on the fuel cell system increases, activate at least one second stack from the plurality of fuel cell stacks in an order of decreasing SoH and in dependence on the value of the requested power output.

The technical benefits include deactivating and activating the stacks in the manner that allows limiting a single cell voltage or potential, i.e. voltage of each fuel cell in each fuel cell stack, to values lower than 0.8V. This allows avoiding degradation of the catalyst and support material. Another advantage is that one or more stacks are selected for deactivation or activation based on their SoH, in a manner that allows balancing a risk of degradation per stack. Thus, the use of the stacks is balanced and a more even degradation of the stacks over time is achieved. In this way, durability and performance of the fuel cell system may be improved, and its lifetime may be increased.

The control system may be configured to control the fuel cell unit and/or the fuel cell system, to deactivate the at least one first stack from the at least two currently active fuel cell stacks or activate at least one second stack from the plurality of fuel cell stacks.

The at least one second stack from the plurality of fuel cell stacks may be activated when at least one stack from the plurality of fuel cell stacks remains to be activated, i.e. the at least one stack is currently not active.

In some examples, the processing circuitry of the control system may be configured to deactivate the at least one first fuel cell stack by disconnecting the first fuel cell stack from the load; preventing a cathode feed line of the first fuel cell stack from supplying an air flow to a cathode of the first fuel cell stack; preventing a cathode output line of the first fuel cell stack from providing a cathode output flow from the cathode of the first fuel cell stack; preventing an anode feed line of the first fuel cell stack from supplying a hydrogen gas flow to an anode of the first fuel cell stack; preventing an anode output line of the first fuel cell stack from providing an anode output flow from the anode of the first fuel cell stack; preventing a coolant feed line of the first fuel cell stack from supplying a coolant flow to the first fuel cell stack; and preventing a coolant output line of the first fuel cell stack from providing a coolant output flow from the first fuel cell stack.

In some examples, the processing circuitry of the control system may be configured to deactivate the at least one first fuel cell stack by preventing the cathode feed line of the first fuel cell stack from supplying the air flow to the cathode of the first fuel cell stack by diverting the air flow to pass through a cathode bypass line of the cathode of the first fuel cell stack, and preventing the anode feed line of the first fuel cell stack from supplying the hydrogen gas flow to the anode of the first fuel cell stack by diverting the hydrogen gas flow to pass through an anode bypass line of the anode of the first fuel cell stack.

In some examples, the processing circuitry of the control system may be configured to activate at least one second stack by controlling a cathode feed line of the second fuel cell stack to supply an air flow to a cathode of the second fuel cell stack; controlling a cathode output line of the second fuel cell stack to provide a cathode output flow from the cathode of the second fuel cell stack; controlling an anode feed line of the second fuel cell stack to supply a hydrogen gas flow to an anode of the second fuel cell stack; and controlling an anode output line of the second fuel cell stack to provide an anode output flow from the anode of the second fuel cell stack.

In some examples, the processing circuitry of the control system may be configured to activate at least one second stack by controlling a coolant feed line of the second fuel cell stack to supply a coolant flow to the second fuel cell stack, and controlling a coolant output line of the second fuel cell stack to provide a coolant output flow from the second fuel cell stack.

In some examples, the processing circuitry of the control system may be configured to, after the at least one first fuel cell stack has been deactivated, adjust proportions of power generated by each of the plurality of fuel cell stacks that remain operating after the first fuel cell stack has been deactivated, so that the remaining fuel cell stacks generate power in accordance with the value of the requested power output.

In some examples, the processing circuitry of the control system may be configured to, after the at least one second fuel cell stack has been activated, adjust proportions of power generated by each of the at least one second fuel cell stack and/or by any other fuel cell stack from the plurality of stacks that is active, so that fuel cell stacks from the plurality of fuel cell stacks that are active generate power in accordance with the value of the requested power output.

In some examples, the processing circuitry of the control system may be configured to, responsive to determining that the value of the requested power output is above the first threshold power level and below the second threshold power level, determine at least one currently active fuel cell stack out of the plurality of fuel cell stacks; and determine whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

In some examples, the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

In some examples, the processing circuitry of the control system may be configured to activate the at least one third fuel cell stack having a highest SoH among the plurality of fuel cell stacks, and to deactivate the at least one fourth fuel cell stack having a lowest SoH among the plurality of fuel cell stacks.

In some examples, the value of the requested power output may be predicted based on properties of a route traveled by the fuel cell vehicle. Other features may additionally be used.

In some examples, a SoH of a fuel cell stack of the plurality of fuel cell stacks may be defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack.

In some examples, the processing circuitry of the control system may be configured to control operation of the fuel cell system so as to maintain a voltage of each fuel cell of each of the plurality of fuel cell stacks to remain below 0.8V.

In an aspect, a fuel cell vehicle is provided that comprises a fuel cell system in accordance with examples of the present disclosure.

In an aspect, a method of operating a fuel cell system is provided. The fuel cell system comprises a fuel cell unit that comprises a plurality of fuel cell stacks and an electrical circuit arranged to selectively connect the fuel cells stacks to a load. The load that is connected to the fuel cell stacks, via one or more components e.g. a DC/DC converter, via the electrical circuit, refers to a consumer of the power generated by the stacks. The load may be, for example, a motor of a fuel cell vehicle including the fuel cell system, heating systems in a vehicle, fans and pumps, or another device or system configured to consume for its operation the power generated by the fuel cell system. It should be noted that the load should be distinguished from the load on the fuel cell system, also interchangeably referred to herein as a power demand on the fuel cell system, which indicates an amount of power that is requested or required from the fuel cell system, as detected by e.g. the control system.

The method comprises obtaining an actual or predicted value of requested power output that is requested from the fuel cell system; monitoring a State of Health (SoH) of each of the plurality of fuel cell stacks; responsive to determining that the value of the requested power output is below a first threshold power level and that a power demand on the fuel cell system decreases, when at least two fuel cell stacks out of the plurality of stacks are currently active, deactivating at least one first fuel cell stack from the at least two currently active fuel cell stacks in an order of increasing SoH and in dependence on the value of the requested power output; and, responsive to determining that the value of the requested power output is above a second threshold power level that is greater than the first threshold power level, and that the power demand on the fuel cell system increases, activating at least one second stack from the plurality of fuel cell stacks in an order of decreasing SoH and in dependence on the value of the requested power output.

The technical benefits include deactivating and activating the stacks in the manner that allows limiting a single cell voltage or potential to values lower than 0.8V, which allows avoiding degradation of the catalyst and support material. Another advantage is that one or more stacks are selected for deactivation or activation based on their SoH, in a manner that allows balancing a risk of degradation per stack. In this way, the lifetime of the fuel cell system may be increased and its overall performance may be improved due to more even degradation of the stacks over time.

In some examples, the at least one first fuel cell stack may be deactivated by disconnecting the first fuel cell stack from the load; preventing a cathode feed line of the first fuel cell stack from supplying an air flow to a cathode of the first fuel cell stack; preventing a cathode output line of the first fuel cell stack from providing a cathode output flow from the cathode of the first fuel cell stack; preventing an anode feed line of the first fuel cell stack from supplying a hydrogen gas flow to an anode of the first fuel cell stack; preventing an anode output line of the first fuel cell stack from providing an anode output flow from the anode of the first fuel cell stack; preventing a coolant feed line of the first fuel cell stack from supplying a coolant flow to the first fuel cell stack; and preventing a coolant output line of the first fuel cell stack from providing a coolant output flow from the first fuel cell stack.

In some examples, the at least one first fuel cell stack may further be deactivated by preventing the cathode feed line of the first fuel cell stack from supplying the air flow to the cathode of the first fuel cell stack by diverting the air flow to pass through a cathode bypass line of the cathode of the first fuel cell stack, and preventing the anode feed line of the first fuel cell stack from supplying the hydrogen gas flow to the anode of the first fuel cell stack by diverting the hydrogen gas flow to pass through an anode bypass line of the anode of the first fuel cell stack.

In some examples, the at least one second stack may be activated by controlling a cathode feed line of the second fuel cell stack to supply an air flow to a cathode of the second fuel cell stack; controlling a cathode output line of the second fuel cell stack to provide a cathode output flow from the cathode of the second fuel cell stack; controlling an anode feed line of the second fuel cell stack to supply a hydrogen gas flow to an anode of the second fuel cell stack; and controlling an anode output line of the second fuel cell stack to provide an anode output flow from the anode of the second fuel cell stack.

In some examples, the at least one second stack may be activated by controlling a coolant feed line of the second fuel cell stack to supply a coolant flow to the second fuel cell stack, and controlling a coolant output line of the second fuel cell stack to provide a coolant output flow from the second fuel cell stack.

In some examples, the method may comprise, after the at least one first fuel cell stack has been deactivated, adjusting proportions of power generated by each of the plurality of fuel cell stacks that remain operating after the first fuel cell stack has been deactivated, so that the remaining fuel cell stacks generate power in accordance with the value of the requested power output.

In some examples, the method may comprise, after the at least one second fuel cell stack has been activated, adjusting proportions of power generated by each of the at least one second fuel cell stack and/or by any other fuel cell stack from the plurality of stacks that is active.

In some examples, the method may comprise, responsive to determining that the value of the requested power output is above the first threshold power level and below the second threshold power level, determining at least one currently active fuel cell stack out of the plurality of fuel cell stacks; and determining whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

In some examples, the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

In some examples, the method may comprise activating the at least one third fuel cell stack having a highest SoH among the plurality of fuel cell stacks, and deactivate the at least one fourth fuel cell stack having a lowest SoH among the plurality of fuel cell stacks.

In an aspect, a control system for controlling a fuel cell system of a fuel cell vehicle is provided. The control system comprises processing circuitry configured to perform the method in accordance with examples of the present disclosure.

In an aspect, a fuel cell vehicle is provided that comprises the control system and/or that is in communication with the control system in accordance with examples of the present disclosure.

In an aspect, a computer program product is provided that comprises computer-executable instructions, which, when executed by processing circuitry, cause the processing circuitry to perform the method in accordance with any aspects and examples of the present disclosure.

In an aspect, a computer-readable storage medium is provided that has stored thereon a computer program product comprising computer-executable instructions which, when executed by processing circuitry, cause the processing circuitry to perform the method in accordance with any aspects and examples of the present disclosure.

Additional features and advantages are disclosed in the following description, claims, and drawings. Furthermore, additional advantages will be readily apparent from the present disclosure to those skilled in the art or recognized by practicing the disclosure as described herein. There are also disclosed herein control units, computer program products, and computer-readable media associated with the above discussed technical effects and corresponding advantages.

### BRIEF DESCRIPTION OF THE DRAWINGS

With reference to the appended drawings, below follows a more detailed description of aspects of the disclosure cited as examples.
**FIG. 1** illustrates a side view of an example of a vehicle comprising a fuel cell system in which a method in accordance with examples of the present disclosure may be implemented.
**FIG. 2** is a block diagram illustrating a fuel cell system and a control system of the vehicle of FIG. 1, in accordance with an example.
**FIG. 3A** is a diagram illustrating an example of a fuel cell system in which a method in accordance with examples of the present disclosure may be implemented.
**FIG. 3B** is another diagram illustrating the fuel cell system of FIG. 3A, showing an electrical circuit.
**FIG. 4A** is a flowchart illustrating a method for operating a fuel cell system, in accordance with an example.
**FIG. 4B** is another flowchart illustrating a method for operating a fuel cell system, in accordance with an example.
**FIG. 5** is another flowchart illustrating a method for operating a fuel cell system, in accordance with an example.
**FIG. 6** is another flowchart illustrating a method for operating a fuel cell system, in accordance with an example.
**FIGs. 7A** and **7B** are schematic block diagrams illustrating examples of a control system, in accordance with an example.

### DETAILED DESCRIPTION

A fuel cell system capable of generating high or higher power may include a single fuel cell unit that comprises one or more fuel cell stacks. The single fuel cell unit may be desirable in various applications, e.g., in fuel cell vehicles, for several reasons, including e.g. space saving considerations, more straightforward maintenance, and simplified control strategies. At the same time, in such fuel cell systems with an improved efficiency, at low loads, a single cell voltage may reach a safety threshold at higher power levels, e.g., already at 50kW in some cases. Thus, in some cases, once the fuel cell system enters an idle mode or state at low loads i.e. low current densities, the single cell voltage may reach the safety threshold quickly. This makes it challenging to properly operate the fuel cell system at low loads without a risk of damaging catalysts and a support material of fuel cell stacks. Moreover, the higher idle power is wasted which decreases efficiency of the fuel cell system.

Accordingly, to control catalyst degradation and thereby control fuel cell system lifetime, it is desirable to limit a maximum value that the single cell voltage may reach at low current densities at the fuel cell system. When the single cell voltage, also interchangeably referred to as single cell potential, increases to a value of or above 0.8V, platinum dissolution starts to occur thereby reducing an electrochemical surface area (ECSA), which in turn leads to reduction of efficiency and lifetime of the fuel cell system. Thus, if the maximum value that the single cell voltage is allowed to reach is set to 0.8V or just below 0.8 e.g. 0.79V, a risk of degradation of the catalysts and the support material may be reduced or avoided.

Solutions have been used which involve a stop/start strategy such that a fuel cell system may be shut down when a single cell voltage reaches 0.8V. For example, when a power demanded from the fuel cell system falls below a certain value e.g. 50kW in some scenarios, the fuel cell system may be shut down. A drawback of such approaches is that frequent stops and starts of the fuel cell system induce other degradation mechanisms such as carbon corrosion in the catalyst support material. Thus leads to reduction of the platinum and thus the reduction of the ECSA, which causes a structure of the catalyst to collapse and thus increases mass transport losses. Thus, stop/start strategies may negatively impact efficiency and lifetime of the fuel cell system.

The method and system of the present disclosure employ a control strategy which involves, at low loads on the fuel cell system, deactivating fuel cell stacks of a fuel cell unit of a fuel cell system in a sequential manner, based on state of health (SoH) of the stacks. After they have been deactivated, the stacks may be activated, in a sequential manner, also based on their SoH. The deactivation and activation of the fuel cell stacks is performed in the manner that balances degradation of the stacks, so that the overall risk of degradation of the stacks is reduced and the lifetime of the fuel cell system is therefore increased i.e. improved.

A controller or control system, configured to control operation of the fuel cell system, may monitor a value of a power output required from the fuel cell system. The power output may be an actual power output. In some examples, in addition or alternatively, the power output may be an expected power output that is expected to be requested from the fuel cell system.

The control system is also configured to monitor a SoH of each fuel cell stack of a fuel cell unit of the fuel cell system. The fuel cell system may comprise one or more fuel cell units. In some examples, the fuel cell system comprises a single i.e. one fuel cell unit comprising a plurality of fuel cell stacks. The control system may also be configured to monitor a voltage of each of fuel cell stacks of the fuel cell system, e.g. to estimate a single cell voltage and to ensure that the value of the single cell voltage at any given time of operation of the fuel cell system does not exceed 0.8V.

The control system may be configured to deactivate and activate stacks in dependance on the value of the requested power output that is determined and/or predicted to be requested from the fuel cell system.

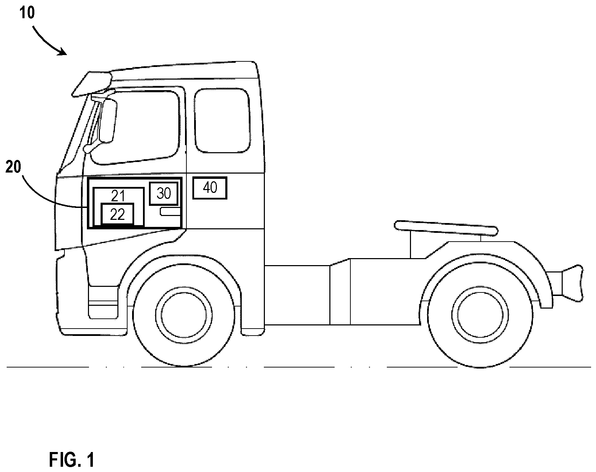

**FIG. 1** depicts a side view of a vehicle 10 according to an example of the present disclosure. The vehicle 10 is shown as a truck, such as a heavy-duty truck for towing one or more trailers (not shown). The vehicle 10 may be a fuel cell electric vehicle (FCEV) or a hybrid vehicle. It should be appreciated that the present disclosure is not limited to any other specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the vehicle 10 comprises a fuel cell system 20 comprising a fuel cell unit 21 that comprises one or more fuel cell stacks 22. The fuel cell system 20 may be used for powering one or more electric drive motors (not shown) which are used for creating a propulsion force to the vehicle 10. The fuel cell system 20 may additionally or alternatively be used for powering other electric power consumers (not shown) of the vehicle 10, such as an electric motor for a crane, an electric motor for a refrigerator system, an electric motor for an air conditioning system, or any other electric power consuming function of the vehicle 10. The fuel cell system 20 may thus additionally or alternatively be used for powering a power take-off (PTO) device that is a device that transfers an electric motor's power to another piece of equipment. The vehicle 10 may include or be coupled to or associated with one or more PTO devices.

The fuel cell unit 21 of the fuel cell system 20 comprises two or more fuel cells which together form one or more fuel cell stacks 22 as shown schematically in FIG. 1. In examples herein, the fuel cell unit 21 may comprise multiple fuel cell stacks 22, and any mention of the fuel cell stack 22 applies to two or more fuel cell stacks. The fuel cell unit 21 is arranged to provide the fuel cells with necessary supply of hydrogen fuel (H₂), oxidant such as air, cooling, heating, etc. The fuel cell system 20 may include various components which are not shown in FIG. 1. In some examples, the fuel cell system 20 may comprise more than one fuel cell unit 21. In some examples, the fuel cell system 20 comprises one fuel cell unit 21.

The fuel cell system 20 may comprise a single fuel cell system, two fuel cell systems, or more than two fuel cell systems, such as three or more fuel cell systems. When several fuel cell units or systems are provided, the fuel cell systems may be either independently controllable or commonly controllable. When independently controllable, each fuel cell system may be controlled to an on-state or an off-state regardless of the state(s) of the other fuel cell system(s). When two or more of the fuel cell systems are commonly controllable, those fuel cell systems are controllable in common to an on-state or an off-state, i.e., all fuel cell systems are controlled in common to the same state. Two fuel cell systems may in some cases be controlled in dependence on one another, such that one of the fuel cell systems is controlled to an on-state or an off-state in dependence on the state of the other fuel cell system(s).

The vehicle 10 further comprises a control device, controller or control system 30 according to an example of the present disclosure. The control system 30 may be configured to control operation of the fuel cell system 20, including activation and/or deactivation of fuel cell stacks, also referred to interchangeably as stacks, of the fuel cell unit 21 of the fuel cell system. The control system 30 is also configured to monitor a SoH of each of the fuel cell stacks 22.

Even though an on-board control system 30 is shown, it shall be understood that the control system 30 may also be a remote control system, i.e. an off-board control system, or a combination of an on-board and off-board control system or systems. The control system 30 may be configured to control the fuel cell system 20 and the one or more fuel cell units 21 by issuing control signals and by receiving status information relating to the fuel cell system 20. The control system 30 may be configured to receive information from various sensors, including one or more of temperature sensors, moisture sensors, voltage sensors, and other sensors included in or associated with the fuel cell system 20 and/or the vehicle 10. For example, one or more voltage sensors may be included in a fuel cell unit to monitor voltage of the fuel cell stacks. Various sensors may acquire measurements regarding operation of components of the fuel cell system 20.

The control system 30 may be communicatively coupled to an internal database, an external database, or a combination thereof, to receive data related to a route traveled or to be traveled by the vehicle. The data related to the route may include a start point, an end point, and a path traveled by the vehicle 10 between the start and end points. The control system 30 may store and/or may have access to data related to the route including terrain information, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on actual and/or predicted weather conditions, and other types of data. The control system 30 may have data on a vehicle current and/or predicted location, e.g., locations to the traveled by the vehicle along the route.

The control system 30 is an electronic control unit and may comprise processing circuitry which is adapted to execute a computer program such as computer-executable instructions to perform a method according to aspects of the present disclosure. The control system 30 may comprise hardware and/or software for performing the method according to aspects of the present disclosure. The control system 30 may be denoted a computer. The control system 30 may be constituted by one or more separate sub-units, and the control system 30 may communicate by use of wired and/or wireless communication technology. For example, as a fuel cell vehicle comprising the fuel cell system is traveling a route, e.g., as part of a mission, the controller may predict values of the power output to be requested from the fuel cell system at upcoming portions of the route. The values of the power output wherein the value of the requested power output may be predicted based on properties of the route traveled by the fuel cell vehicle and features of a mission assigned to the vehicle. The properties of the route may include actual i.e. current and/or predicted ambient conditions along the route. For example, as the vehicle is expected to travel a portion of the route where reduced speeds are expected, lower values of the power output may be predicted. The values of the power output may also be predicted based on characteristics of the fuel cell vehicle, such as one or more of its payload, cooling system capacity e.g. as a function of ambient conditions, etc. As the ambient temperature increases, the difference between the coolant temperature and the ambient temperature may reduce; thus, to maintain the same cooling performance, an increased air or coolant flow may be required. That will lead to additional electrical power requirements, which will then reduce the net electrical power for a fuel cell net power. The cooling system capacity available for the fuel cell system may also depend on properties of the route that the vehicle is traveling. For example, as the vehicle is coming from a descend, where e.g. a brake resistor is dissipating energy, the coolant temperature may be high such as above certain fuel cell system limits. If after that descent there is an immediate uphill portion of the route where a full power is required from the fuel cell system, the coolant temperature will first need to be reduced before the fuel cell system can be actually requested the full power.

The vehicle 10 may also comprise various other components not shown in FIG. 1. For example, the vehicle 10 comprises an electrical storage system (ESS) (not shown) such as e.g. one or more batteries and/or one or more supercapacitors for storing electric energy.

Although the present disclosure is described with respect to a vehicle such as a truck, aspects of the present disclosure are not restricted to this particular vehicle, but may also be used in other vehicles such as passenger cars, off-road vehicles, aircrafts, and marine vehicles. The present disclosure may also be applied in vessels and in stationary applications, such as in grid-connected supplemental power generators or in grid-independent power generators.

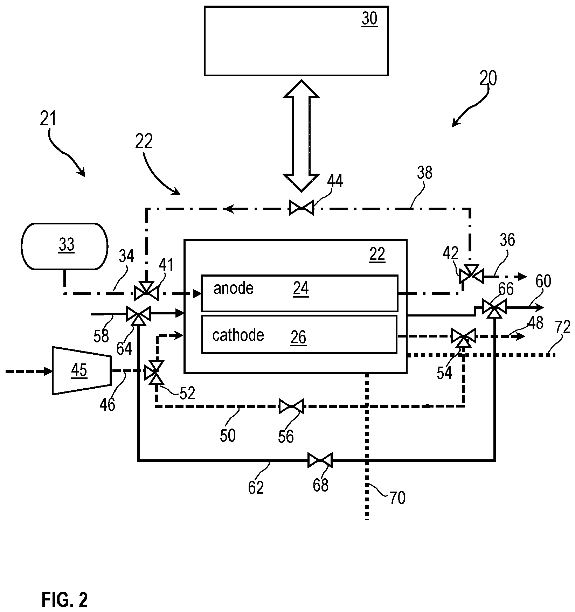

**FIG. 2** further illustrates an example of the fuel cell unit 21 of the fuel cell system 20 that can be deployed in a fuel cell vehicle such as e.g. the vehicle 10. As shown, the fuel cell unit 21 comprises the fuel cell stack 22. The fuel cell unit 21 may include more than one stack e.g. a plurality of fuel cell stacks 22, and one fuel cell stack 22 is shown as an example. Operation of the fuel cell system 20 is controlled by the control system 30 also shown in FIG. 2.

The fuel cell stack 22 comprises an anode side or anode 24, a cathode side or cathode 26, and an electrolyte (not shown) such as e.g. a proton exchange membrane (PEM) sandwiched between the anode 24 and the cathode 26. The fuel cell stack 22 is configured to generate power through an electrochemical reaction between a hydrogen gas supplied to the anode 24 and an oxidant such as oxygen or air supplied to the cathode 26.

In the fuel cell stack 22 in accordance with examples of the present disclosure, reactants' feed to individual stacks may include a bypass line, with valves and flow restrictors to control a flow of a corresponding reactant. Electrical connections between individual stacks may have multiple switches, in and out of every stack to a converter, e.g. a DC/DC converter, and in between the stacks, to control the current flow.

The anode 24 receives fuel such as the hydrogen gas that can be supplied from a hydrogen storage device 33 e.g. a hydrogen container or tank that may be refillable and/or replaceable. Any other suitable source of hydrogen can be used to supply the hydrogen gas to the anode 24. The anode 24 is configured to receive the hydrogen gas via an anode feed line 34 configured to supply a hydrogen gas flow to the anode 24. The anode feed line 34 of the stack 22 may be configured to be fluidly coupled to a fuel cell unit anode inlet line which is configured to supply the hydrogen gas to all fuel cell stacks of the fuel cell unit 21. The lines or passages or conduits configured to carry fluids to and from the anode 24 are shown by dot-dashed lines in FIG. 2.

The anode output line 36 is configured to provide an anode outlet flow from the anode 24, i.e. it receives and leads away from the anode 24 byproducts of operation of the anode 24. As shown in FIG. 2, the fuel cell stack 22 also comprises an anode bypass loop or line 38 that is configured to allow the hydrogen gas to be lead away from the anode feed line 34, to bypass the anode 24. The anode bypass line 38 may be coupled between the anode feed line 34 and the anode output line 36. As shown by way of example, an anode inlet valve 40 may be positioned to control a flow of the hydrogen gas from the anode feed line 34 to bypass the anode 24, and an anode outlet valve 42 may be positioned to control a flow of the hydrogen gas from the anode bypass line 38 to the anode output line 36.

The anode bypass line 38 may comprise an anode flow restriction valve 44 that is configured to control a mass flow of the hydrogen gas through the anode bypass line 38 when the anode bypass line 38 is open i.e. the hydrogen gas is allowed to flow therethrough. The anode bypass line 38 may be open when the stack 22 is deactivated and the hydrogen gas is not supplied to the anode 24. The anode flow restriction valve 44 may be controlled to operate so as to maintain a certain pressure of the hydrogen gas when the anode bypass line 38 is open and the hydrogen gas is not supplied to the anode 24, as if the hydrogen gas would flow to the anode 24.

As also shown in FIG. 2, the fuel cell stack 22 also comprises a cathode feed line 46 configured to supply an air or oxygen flow to the cathode 26. The air flow may be supplied e.g. from an ambient environment. An air compressor 45 is configured to pressurize the air flow, and the air flow may also be cooled. For example, the air compressor 45 may be fluidly coupled to a charge air cooler (CAC), not shown in FIG. 2, that is configured to cool the air flow in the cathode feed line 46. The air flow may also be humidified by a humidifier (not shown). In some examples, the air compressor 45 may be an electric turbocharger (ETC).

The cathode feed line 46 of the stack 22 may be configured to be fluidly coupled to a fuel cell unit cathode inlet line which is configured to supply the air flow to all fuel cell stacks of the fuel cell unit 21. The lines or passages or conduits configured to carry fluids to and from the cathode 26 are shown by dashed lines in FIG. 2.

A cathode output line 48 is configured to provide a cathode output flow from the cathode 26. A cathode anode bypass loop or line 50 that is configured to allow the air flow to bypass the cathode 26. The cathode bypass line 50 may be coupled between the cathode feed line 46 and the cathode output line 48. As shown by way of example, a cathode inlet valve 52 may be positioned to control the air flow from the cathode feed line 46 to bypass the cathode 26, and a cathode output valve 54 may be positioned to control a passage of the air flow from the cathode bypass line 50 to the cathode output line 48. The cathode bypass line 50 may comprise a cathode flow restriction valve 56 that is configured to control a mass flow of the air flow through the cathode bypass line 50.

In some examples, when a fuel cell stack, e.g., the fuel cell stack 22 shown in FIG. 2, is deactivated, the flow of the hydrogen gas towards the anode 24 may be blocked and the anode bypass line 38 may be open such that the hydrogen gas is passed therethrough. Similarly, the flow of the air flow to the cathode 26 may be blocked and the cathode bypass line 50 may be open.

As shown in FIG. 2, the fuel cell stack 22 also comprises a coolant feed line 58 that is configured to supply a coolant to the fuel cell stack 22 and a coolant output line 60 that is configured to provide a coolant outlet flow from the fuel cell stack. The coolant feed and outlet lines 58, 60 may be part of a coolant system or circuit, also referred to as a coolant loop, that is configured to circulate a coolant through the fuel cell stack 22 to regulate a temperature of the stack 22. The coolant feed line 58 of the stack 22 may be configured to be fluidly coupled to a fuel cell unit coolant inlet line which is configured to supply the coolant to all fuel cell stacks of the fuel cell unit 21. The lines or passages or conduits configured to carry the coolant to and from the stack 22 are shown by solid lines in FIG. 2.

In some examples, as shown in FIG. 2, the fuel cell stack 22 may comprise a coolant bypass loop or line 62 that is configured to allow the coolant to bypass the stack 26. The coolant bypass line 62 may be coupled between the coolant feed line 58 and the coolant output line 60. As shown by way of example, a coolant inlet valve 64 may be positioned to control the coolant flow from the coolant feed line 58 to bypass the stack 22, and a coolant outlet valve 66 may be positioned to control a passage of the coolant flow from the coolant bypass line 62 to the coolant output line 60. The coolant bypass line 62 may comprise a coolant flow restriction valve 68 that is configured to control a mass flow of the coolant passed through the coolant bypass line 62. It should be appreciated that the coolant bypass line 62 may be optional, such that some implementations of the fuel cell stack 22 may not include the coolant bypass line 62.

Furthermore, in some examples, the anode bypass line 38 and/or the cathode bypass line 50 may be optional.

As further shown in FIG. 2 by dotted lines, the fuel cell stack 22 may have at least one electrical connection 70 to a load, e.g., to a DC/DC converter that is configured to electrically couple the fuel cell stack 22 to the load. The fuel cell stack 22 may also be configured to be electrically coupled, via an electrical connection 72, to another stack in the fuel cell unit 21. Although one line or electrical connection 72 is shown, it should be appreciated that the fuel cell stack 22 may be configured to be electrically coupled to each of the all other fuel cell stacks in the fuel cell unit 21. One or more electrical switches may be used to control the electrical connection 70 between the stack 22 and the load, such that the stack 22 may be electrically connected to the load or may be electrically disconnected from the load. Similarly, one or more electrical switches may be used to control the electrical connection 72 between the stack 22 and another fuel cell stack, such that the stack 22 may be electrically connected to another stack or may be electrically disconnected from another stack. Every time a stack is activated or deactivated, corresponding electrical switches have to be open/closed accordingly, to guarantee a correct electrical connection between the remaining stacks. Each individual stack may operate alone or be deactivated independently of the rest of the stacks. Also, any combination of the stacks may remain operating or be deactivated.

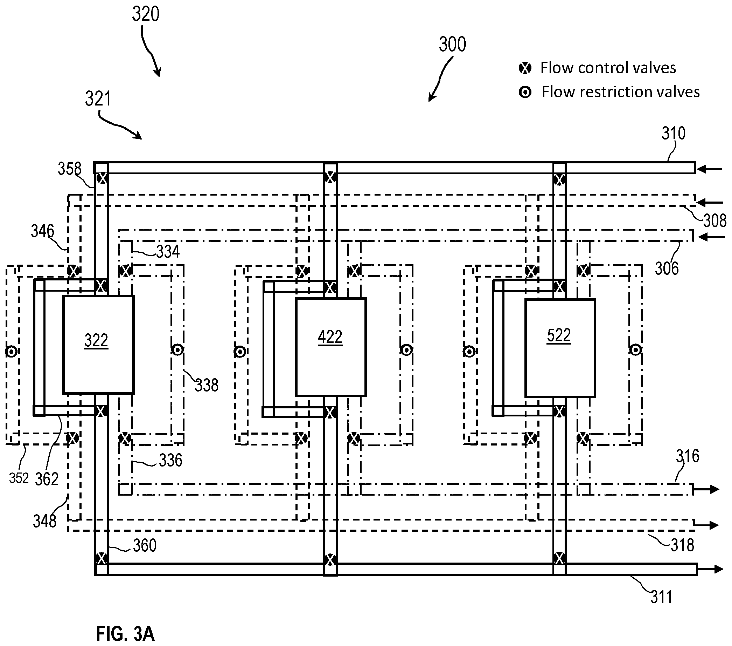

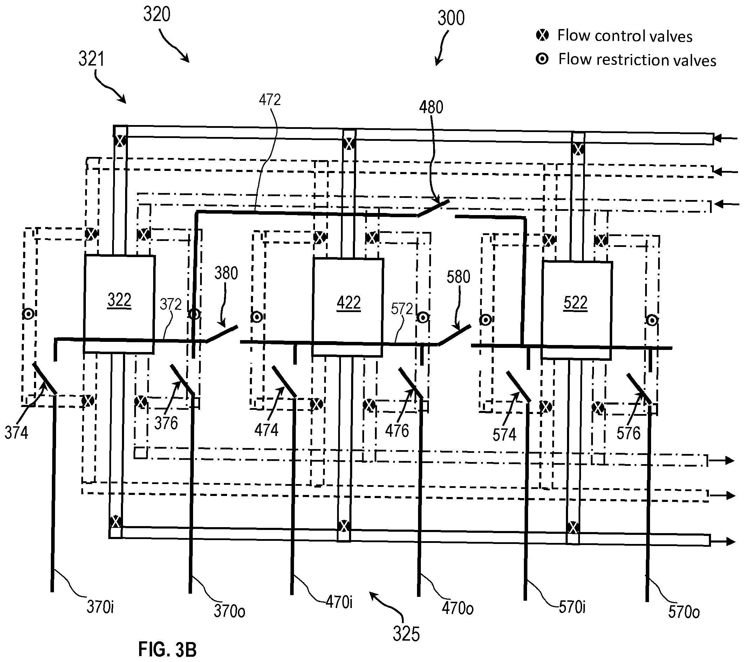

A fuel cell unit in accordance with examples of the present disclosure, e.g., the fuel cell unit 21, may comprise more than one fuel cell stack. **FIGs. 3A** and **3B** illustrate an example of a fuel cell unit 321 of a fuel cell system 320, which may be similar to fuel cell unit 21 of FIG. 2, that comprises three fuel cell stacks - a first fuel cell stack 322, a second fuel cell stack 422, and a third fuel cell stack 522. Each of the first, second, and third fuel cell stacks 322, 422, 522 may be similar to the fuel cell stack 22 of FIG. 2 and the components of the stacks 322, 422, 522 are therefore not discussed in detail in connection with FIGs. 3A and 3B.

FIG. 3A and 3B illustrate that each of the stacks 322, 422, 522 is configured to be activated and deactivated separately. The activation of a stack may involve allowing reactants such as the hydrogen gas and air to be supplied to the anode and cathode, respectively, of the stack. The deactivation of a stack may involve blocking the reactants from being supplied to the anode and cathode of the stack. A deactivation of a stack is a shutdown of that stack such that no electrochemical reaction takes places in that stack. A coolant flow may be circulated through the stack when the stack is activated, and the coolant flow may be blocked from being passed through the stack when the stack is deactivated. The activation of a stack may further involve connecting the stack to the load, and the deactivation of the stack may involve disconnecting the stack from the load. Furthermore, when a stack is deactivated, it may be disconnected from the other stacks in the fuel cell unit. Stacks that remain to be activated or active are electrically connected to each other and to the load.

FIG. 3A shows that each of the first, second, and third stacks 322, 422, 522 may be configured to be fluidly coupled to a fuel cell unit anode inlet line 306 that is configured to supply the hydrogen gas to all fuel cell stacks 322, 422, 522 of the fuel cell unit 21. As shown in FIG. 3A, the fuel cell unit anode inlet line 306 is configured to be fluidly coupled to respective anode feed lines of the first, second, and third stacks 322, 422, 522. An anode feed line 334 of the first fuel cell stack 322 is marked in FIG. 3A, and anode feed lines of the second and third fuel cell stacks 422, 522 are not marked for the sake of clarity of representation. Anode output lines, e.g., an anode output line 336 of the first fuel cell stack 322, are configured to be fluidly coupled to a fuel cell unit anode output line 318 configured to receive respective anode outlet flows of anodes of each of the stacks of the fuel cell unit 321.

Each of the first, second, and third stacks 322, 422, 522 may be configured to be fluidly coupled to a fuel cell unit cathode inlet line 308 and to a fuel cell unit cathode output line 318. The fuel cell unit cathode inlet line 308 is configured to supply the air flow to cathode feed lines of all fuel cell stacks 322, 422, 522, e.g., to a cathode feed line 346 of the first fuel cell stack 322. Cathode output lines of the stacks 322, 422, 522, e.g., a cathode output line 348 of the first fuel cell stack 322, are configured to fluidly couple to the fuel cell unit cathode output line 318 that is configured to receive and carry away from the stacks respective stacks' cathode output flows. It should be noted that that the outlet flows of cathodes may include ingredients other than air and that, generally, notations in FIG. 3A are for illustration purposes only.

As shown in FIG. 3A, each of the first, second, and third stacks 322, 422, 522 may be configured to be fluidly coupled to a fuel cell unit coolant inlet line 310 and to a fuel cell unit coolant output line 311. The fuel cell unit coolant inlet line 310 is configured to supply a coolant or coolant flow to the fuel cell stacks 322, 422, 522, e.g., to a coolant feed line 358 of the first fuel cell stack 322. The fuel cell unit coolant output line 311 is configured to receive the coolant flow from each the fuel cell stacks 322, 422, 522, after the respective coolant flow has passed through the stack. For example, a coolant output line 360 of the first fuel cell stack 322 is configured to fluidly couple to the fuel cell unit coolant output line 311 to receive the coolant flow passed through the first fuel cell stack 322.

As shown in FIG. 3A, in each of the stacks 322, 422, 522, the hydrogen gas flow, the air flow, and the coolant flow may be directed to bypass the respective stack via a bypass line. Thus, as shown for the first fuel cell stack 322, similarly to fuel cell stack 22 of FIG. 2, the first fuel cell stack 322 comprises an anode bypass line 338, a cathode bypass line 350, and a coolant bypass line 362. The bypass lines may comprise corresponding flow restriction valves shown schematically in FIG. 3A. Similarly to the example of FIG. 2, flow control valves, shown in FIG. 3A, may be configured to control flows of hydrogen gas, air, and coolant to and from the bypass lines. The second and third fuel cell stacks 422, 522 are configured in a similar manner.

A control system may be configured to control operation of the flow control valves to allow respective flows to be supplied to the stack or to block the flows from being supplied to the stack. When a flow of a reactant is prevented and/or blocked from being delivered to the stack, that flow may be directed to bypass the stack, as in the examples shown in FIGs. 2 and 3A-3B.

In some examples, the flow control valves of the stack may be controlled such that the reactants' mass may not be changed when the stack is deactivated. In order to attain a balanced flow through all the stacks, when the bypass lines are open, flow restriction valves in the bypass lines are operated to provide the same pressure drop as through a respective stack. Because one of more of the plurality of the fuel cell stacks may be deactivated and one or more of the plurality of the fuel cell stacks may be activated at a given point in time, the flow restriction in the bypass lines may allow preventing the respective flows from going through the bypass lines rather than through active stacks.

In some examples, the coolant bypass lines may not be present. In some examples, the anode bypass lines and the anode bypass lines may not be present. In some implementations, bypass lines may not be used, and a flow may be blocked from being supplied to a respective part of the stack without instead being directed to a bypass line. In such implementations, the reactants' flows to a stack are reduced as the stack is deactivated.

FIG. 3B shows the fuel cell unit 321 of the fuel cell system 320 of FIG. 3A, and additionally illustrates an example of an electrical circuit 325 arranged to selectively connect the fuel cells stacks to a load. Each of the fuel cell stacks is configured to be electrically coupled to all other fuel cell stacks from the plurality of fuel cell stacks. The stacks may be deactivated or activated in any configuration. For example, only the first stack 322 may be active and operating; or only the second stack 422 may be active and operating; or only the third stack 522 may be active and operating; or the first and second stacks 322, 422 may be active and operating while the third stack 522 may be deactivated; or the second and third stacks 422, 522 may be active and operating while the first stack 322 may be deactivated; or the first and third stacks 322, 522 may be active and operating while the second stack 422 may be deactivated.

FIG. 3B shows electrical connections between the stacks, as well as electrical connections, for each stack, from the load and to the load. In the illustrated example, the electrical connections to the load, e.g., a motor of a vehicle, may be electrical connections to a DC/DC converter which is not shown.

Thus, as shown in FIG. 3B, the electrical circuit 325 comprises electrical connections 370i, 370o to and from the first stack 322, electrical connections 470i, 470o to and from the second stack 422, and electrical connections 570i, 570o to and from the third stack 522. The electrical connection 370i from the load to the first stack 322 has a switch 374, and the electrical connection 370o from the first stack 322 to the load has a switch 376. The electrical connection 470i from the load to the second stack 422 has a switch 474, and the electrical connection 470o from the second stack 422 to the load has a switch 476. Similarly, the electrical connection 570i from the load to the third stack 522 has a switch 574, and the electrical connection 570o from the third stack 522 to the load has a switch 576. The switches 374, 376, 474, 476, 574, and 576 are shown as open for illustration purposes only, and not to show operation of the electrical circuit 325 at any point in time. During operation of the fuel cell system 320, any of the switches 374, 376, 474, 476, 574, and 576 may be open or closed, depending on a status of a corresponding fuel cell stack, i.e. depending on whether that stack is active i.e. operating or deactivated i.e. not operating. The stack that has been deactivated is considered to not produce any energy or power.

FIG. 3B shows that the first and second stacks 322, 422 are connectable via an electrical connection 372 having a switch 380, the second and third stacks 422, 522 are connectable via an electrical connection 572 having a switch 580, and the first and third stacks 322, 522 are connectable via an electrical connection 472 having a switch 480. The switches 380, 480, and 580 are shown as open for illustration purposes only, and not to show operation of the electrical circuit 325 at any point in time.

Each of the first, second, and third stacks 322, 422, 522 is configured to be electrically connected to any other of the stacks 322, 422, 522, and the stack may be connected to or disconnected from the load.

As an illustrative example of a control of a fuel cell system in accordance with examples of the present disclosure, each stack of a plurality of fuel cell stacks of the fuel cell system may produce energy at low current density, e.g, a value of a power output requested from the fuel cell system may be determined to be below a first threshold power level, e.g., below 60kW. The power demand on the fuel cell system decreases. A value of the requested power output requested from each of the stacks may be 20kW. A single cell potential of each fuel cell in a fuel cell stack is maintained to be below 0.8V. The fuel cell system comprising a single fuel cell unit encompassing three fuel cell stacks, as shown e.g. in the example of FIGs. 3A and 3B, may thus be producing 60kW of idle power, with the single cell potential of 0.8V. A control system or controller, e.g., a fuel cell control unit (FCCU) monitors a SoH of each of the stacks. As the value of the requested power output, which may also be referred to as a vehicle power request, drops below 60kW, the controller may determine which one or more of the stacks may be deactivated, in order to maintain a balance degradation behavior among all of the stacks.

Thus, if, for example, the value of the requested power output requested from the fuel cell system is further reduced to 50kW, the control system may, based on SoH of the stacks, deactivate one of the stacks and request 25kW from each of the remaining stacks. These remaining stacks will operate with a single cell potential, i.e. a voltage of each of the fuel cells in the stack, lower than 0.8V to deliver that power. If the value of the requested power output becomes lower than 40kW, the control system may, based on the SoH of the remaining stacks, deactivate another stack. The remaining stack will then provide power to a load e.g. the vehicle, while operating safely at below the 0.8V single cell potential. Then, when the value of the requested power output or vehicle power request becomes lower than 20kW, the last operating stack may be deactivated, and the power may then be provided by an electrical storage system (ESS) e.g. one or more batteries.

It should be appreciated that the value of the power requested from the fuel cell system may decrease gradually in some cases, such as the stacks may be deactivated sequentially, e.g. one at a time. In some cases, the value of the power requested from the fuel cell system may decrease quickly, e.g., when the vehicle slows down suddenly, and more than one stack may be deactivated simultaneously. The fuel cell unit may include more than three stacks.

For this strategy to work, every time a stack is deactivated the valves at inlet and outlet of that stack for reactants and coolant will block the flow through the stack. For the reactants, in the illustration above, it is assuming that the reactants' mass is not changed when a stack is deactivated, so the flow is by-passed through the by-pass route. In order to have a balanced flow through all the stacks, when the by-passes are open, the flow restriction is required in the by-pass to provide the same pressure drop as through the stack, this way it is possible to avoid the flow from going through the by-pass instead and not through the active stacks.

As one or more stacks, and in some cases all of the stacks, of a fuel cell unit of a fuel cell system are deactivated and thus do not produce power, the control system may determine that power requirements from the fuel cell system become such that one or more of the deactivated stacks need to be activated. Respective switches may be operated to allow individual stacks to be connected to the load when the stacks are activated, and to be disconnected from the load when the stacks are deactivated. Depending on which stacks remain to be operating, i.e. active, the stacks may be connected to one another in addition to being connected to the load.

In some examples, responsive to determining that the value of the requested power output is above a second threshold power level and that the power demand on the fuel cell system increases, when at least one stack from the plurality of fuel cell stacks remains to be activated, i.e. the at least one stack is currently not active, the control system may activate at least one second stack from the plurality of fuel cell stacks in an order of decreasing SoH and in dependence on the value of the requested power output..

As an example, in certain circumstances, every stack from a plurality of stacks in a fuel cell unit of a fuel cell system may produce at its highest current density a power of 150kW. With reference to the fuel cell unit 321 of FIGs. 3A and 3B, all of the stacks of the fuel cell system (with a single fuel cell unit) will be producing 450kW. If the vehicle starts with an empty or lower load, the required traction power may be much lower than the maximum power of the fuel cell system and may be met e.g. by capabilities of only one stack. Thus, for example, the vehicle power request may be around 80kW and the control system may be monitoring a SoH of each of the stacks, to determine which of the stack to activate, in order to maintain a balance degradation behavior among all stacks and activate only one stack. Thus, one of the stacks may be selected for activation and that stack may be activated. The connections feeding reactants to the selected stack, as well as electrical connections with that stack may be controlled accordingly.

Continuing with the above example, as the vehicle exerts a higher load or power demand on the fuel cell system, e.g. as the vehicle power request increases to 150kW, the control system, based on the SoH of the stacks, can continue to increase the power demand in the activated stack or it can decide to activate other one or more stacks and distribute the loads between them. This way, the stacks can be balanced based on their SoH, thereby more even degradation of the stacks is achieved.

In some examples, stacks that are operated may be switched or swapped. For example, if one of the stacks has been operating longer, at a certain point during a route or mission assigned to the vehicle, the control system may decide to start to reduce the load on that stack and to activate another stack. The load on the initially activated stack may be reduced to the point that this stack may be deactivated. One or more stacks may be activated and deactivated until the vehicle power request reaches a maximum net power produced by the fuel cell unit.

In some examples, if the power is stable, depending on SoH of the stacks, the control system may decide to switch between stacks. For example, if one stack is deactivated and the operating time in that power is long enough, maybe, depending on SoH, the deactivated stack can be activated and another stack will then be deactivated.

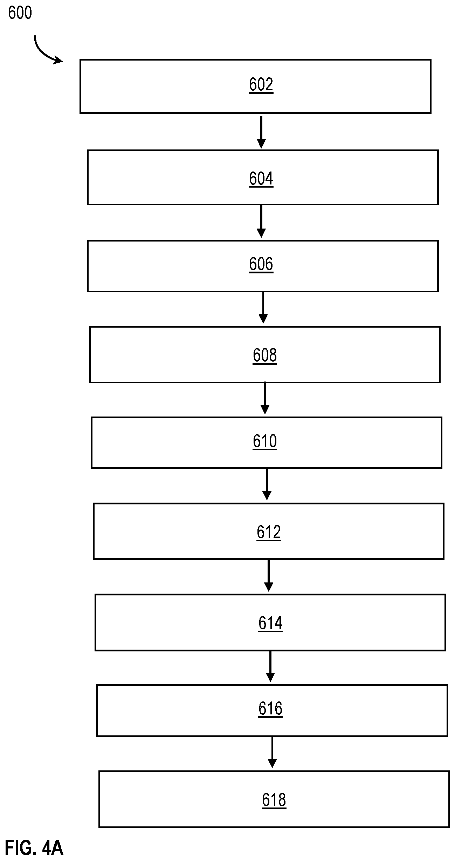

**FIG. 4A** illustrates a process or method 600 of operating a fuel cell system comprising a fuel cell unit that comprises a plurality of fuel cell stacks and an electrical circuit arranged to selectively connect the fuel cells stacks to a load. The fuel cell system may be, e.g., fuel cell system 20 (FIG. 2), fuel cell system 320 (FIGs. 3A and 3B), or any other fuel cell system. The method may be performed by a controller or control system such as e.g. control system 30. The process or method 600 may be performed continuously during operation of the fuel cell system. At any given point in time, one or more of the plurality of fuel cell stacks may be active i.e. producing power, and one or more of the plurality of fuel cell stacks may be inactive i.e. not producing power.

At certain circumstances, all of the stacks may be operating i.e. the stacks are all active. This may occur when high power is requested from the fuel cell system. Additionally or alternatively, this may occur when all of the stacks are needed to meet the requested power.

In some circumstances, all of the stacks may be deactivated, for example, when the fuel cell system is shut down. Such scenarios are not discussed in detail herein, but it should be appreciated that the activation of one or more stacks may occur when all of the stacks are inactive.

The control system, such as the processing circuitry of the control system, is configured to control operation of the fuel cell unit so as to maintain a voltage of each fuel cell of each of the plurality of fuel cell stacks to remain below 0.8V.

At **block 602,** the control system may obtain an actual or predicted value of requested power output that is requested from the fuel cell system. The actual value of the requested power output may be a measured value of power that is currently requested from the fuel cell system i.e. current load or power demand on the fuel cell system. The value of the requested power output may comprise multiple values.

In some examples, the value of the requested power output is an expected value of the requested power output that is expected to be requested from the fuel cell system. The control system may be configured to execute a look ahead process which involves determining ahead of time an amount of power that will be requested from the fuel cell system. In some examples, the control system may receive information on expected amount of power that the vehicle may request from the fuel cell system, e.g., from a vehicle controller that may implement mission management. Such look ahead strategy allows predictively deactivating and activating fuel cell stacks of the fuel cell system, in order to meet upcoming power requirements of the load that consumes power generated by the fuel cell system. For implementation of such strategy, the control system and/or the vehicle controller may assess various features related to the vehicle and a route traveled by the vehicle, and to generate one or more values of the power output, so that the fuel cell system may be controlled in accordance with the generated values.

In some examples, the control system may obtain or acquire or determine predicted values of power output requested from the fuel cell system a certain period of time in advance. This period of time may also be referred to as a time horizon. As a non-limiting example, a duration of the time horizon may be, e.g., 3 hours, and the control system may know the forecasted power required in a flat part of the road that lasts e.g. 30 minutes at a low power. Depending on various factors such as, e.g. characteristics of fuel cells, cooling capabilities, etc., the control system may determine response time characteristics to know when to start conditioning fuel cell stacks to allow to run the fuel cell unit for the 30 minutes-long low-power period, with a certain number of stacks.

As another example, the control system may acquire information on road conditions, e.g., a traffic jam, ahead of the vehicle along the route that the vehicle travels. If the control system determines, and/or acquires relevant information, that the vehicle is expected to operate at a low power, while driving slowly due to the traffic congestion, for a certain duration of time e.g. 20 minutes, the control system may decide to execute the method in accordance with examples of the present disclosure, to decide whether to deactivate at least one stack during the low-power period. However, if the vehicle is expected to slow down for a duration that is shorter than the certain duration of time, e.g., for less than 20 minutes, or less than 10 minutes, the control system may decide not to execute the method in accordance with examples of the present disclosure.

In some examples, the control strategy may be developed to define a minimum time where stack activation and/or deactivation can be beneficial. For example, the change in the status of the fuel cell unit, due to an activation of a stack and/or a deactivation of a stack, may not occur if the change in the power level in the fuel cell system occurs or is expected to occur for a certain duration of time before a certain time threshold.

For example, as a fuel cell vehicle comprising the fuel cell system is traveling a route, e.g., as part of a mission, the control system may predict values of the power output to be requested from the fuel cell system at upcoming portions of the route. The values of the power output wherein the value of the requested power output may be predicted based on properties of the route traveled by the fuel cell vehicle and features of a mission assigned to the vehicle. The properties of the route may include actual i.e. current and/or predicted ambient conditions along the route. For example, as the vehicle is expected to travel a portion of the route where reduced speeds are expected, lower values of the power output may be predicted. When the vehicle is expected to travel a portion of the route where an increased power demand on the fuel cell system is expected, higher values of the power output may be predicted. The values of the power output may additionally be predicted based on characteristics of the fuel cell vehicle, such as one or more of its payload, cooling system capacity e.g. as a function of ambient conditions, road properties, etc. As discussed above, the control system may predict values of the power output to be requested from the fuel cell system within a certain time period or horizon.

At **block 604,** the control system monitors a SoH of each of the plurality of fuel cell stacks. In some examples, a SoH of a fuel cell stack of the plurality of fuel cell stacks may be defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack. The voltage level can be defined as a measured level of voltage of the fuel cell stack. In some examples, to assess an SoH for a fuel cell stack, at every power level of that fuel cell stack, it is possible to check the voltage and current from that stack against known or reference voltage and current values corresponding to that power level. The number of operating hours of the fuel cell stack can be defined as a number that the fuel cell stack has been operated i.e. has been active or activated, not including period of inactivity of the fuel cell stack. The number of start/stop events for the fuel cell stack can be defined as a number of times that fuel cell stack has been activated or started and deactivated or stopped.

It should be noted that the monitoring at block 604 may be performed simultaneously with the obtaining the actual or predicted value of requested power output that is requested from the fuel cell system, and that the SoH of the fuel cell stacks may be monitored independently of obtaining or acquiring the value of the requested power output that is required from the fuel cell system. The SoH is monitored per stack, to be able to even out the degradation among the stacks.

At **block 606,** the control system, responsive to determining that the value of the requested power output is below a first threshold power level and that a power demand on the fuel cell system decreases, when at least two fuel cell stacks out of the plurality of stacks are currently active, deactivates at least one first fuel cell stack from the at least two currently active stacks in an order of increasing SoH and in dependence on the value of the requested power output. Previously activated, i.e. currently active, stacks may be deactivated such that stacks with a lower SoH are deactivated before stacks with a higher SoH are deactivated. One or more stacks may be deactivated simultaneously and/or one or more stacks may be deactivated sequentially.

In some examples, the control system may control the fuel cell unit and/or the fuel cell system to deactivate at least one first fuel cell stack when the power demand on the fuel cell system decreases, such as the power demand is decreasing or is expected to decrease for a certain period of time that may be longer than e.g. a threshold time period. The threshold time period may be selected such that, during a period of a low or lower power demand on the fuel cell system, it is beneficial to deactivate at least one first fuel cell stack from the plurality of fuel cell stacks.

In some examples, the first threshold power level comprises 60kW or 50kW or 40kW or 20kW. In some examples, the first threshold power level may be e.g., about 60kW. In some examples, the first threshold power level may vary within a range of from about 60kW to about 75kW, or from about 60kW to about 70kW. Any other suitable threshold power levels may be used additionally or alternatively. The at least one fuel cell stack e.g. one or more stacks, may be deactivated in dependence on the value of the requested power output, and also responsive to how quickly the required power output is changing. For example, in some circumstances, the required power output or load on the fuel cell system may be decreasing quickly, e.g., as one example, from 70kW to 20kW. More than one stack may be deactivated simultaneously. In any case, as the power required to be output from the fuel cell system decreases, further stacks from the plurality of the fuel cell stacks may be deactivated.

In other circumstances, the required power output or power demand on the fuel cell system may be decreasing slowly, and the stacks may be deactivated one at a time.

To implement the selective stack deactivation in accordance with examples of the present disclosure, when a stack is deactivated, the valves at inlet and outlet of that stack for reactants, including the coolant, may be operated to block the respective flow through the stack. The reactants' mass may be not changed when the stack is deactivated, so the flow is directed to bypass the stack, via a bypass line. In order to maintain a balanced flow through all the stacks, when the bypass lines are open, flow restriction valves or other similar elements in the bypass lines are operated to provide the same pressure drop as through the stack. Furthermore, every time a stack is deactivated, the electrical switches are controlled to be open/closed accordingly, to ensure an appropriate electrical connection between the stacks that remain to be operating. The electrical connections are configured to allow controlling operation of every individual stack, and any combination of the stacks.

Thus, in some examples, the control system, e.g. its processing circuitry, may be configured to, responsive to determining that the value of the requested power output is below the first threshold power level, deactivate the second fuel cell stack by disconnecting the second fuel cell stack from the load, prevent a cathode feed line of the second fuel cell stack from supplying an air flow to a cathode of the second fuel cell stack, prevent a cathode output line of the second fuel cell stack from providing a cathode output flow from the cathode of the second fuel cell stack, prevent an anode feed line of the second fuel cell stack from supplying a hydrogen gas flow to an anode of the second fuel cell stack, prevent an anode output line of the second fuel cell stack from providing an anode output flow from the anode of the second fuel cell stack, prevent a coolant feed line of the second fuel cell stack from supplying a coolant flow to the second fuel cell stack, and prevent a coolant output line of the second fuel cell stack from providing a coolant output flow from the second fuel cell stack. The control system may determine that the power demand on the fuel cell system decreases using, e.g., a prediction such as a look-ahead functionality to determine that the load is decreasing. The power demand refers to a power request from the control system, e.g., an electronic control unit (ECU), and the control system may be configured to determine that the load on the fuel cell system is currently decreasing or about to decrease.

In some examples, the processing circuitry of the control system may be configured to prevent the cathode feed line of the second fuel cell stack from supplying the air flow to the cathode of the second fuel cell stack by diverting the air flow to pass through a cathode bypass line of the cathode of the second fuel cell stack. As a non-limiting example, the cathode bypass line may be configured, e.g., as cathode bypass line 50 of the fuel cell stack 22 of FIG. 2, or any of the cathode bypass lines shown in FIGs. 3A and 3B. In some examples, the processing circuitry of the control system may be configured to prevent the anode feed line of the second fuel cell stack from supplying the hydrogen gas flow to the anode of the second fuel cell stack by diverting the hydrogen gas flow to pass through an anode bypass line of the anode of the second fuel cell stack. As a non-limiting example, the anode bypass line may be e.g. anode bypass line 38 of the fuel cell stack 22 of FIG. 2, or any of the anode bypass lines shown in FIGs. 3A and 3B.

In some examples, the processing circuitry of the control system may also be configured to prevent the coolant feed line of the second fuel cell stack from supplying the coolant flow to the second fuel cell stack by diverting the coolant flow to pass through a coolant flow bypass line of the second fuel cell stack. As a non-limiting example, the coolant bypass line may be e.g. coolant bypass line 62 of the fuel cell stack 22 of FIG. 2, or any of the coolant bypass lines shown in FIGs. 3A and 3B.

At **block 608,** the control system may, after the at least one first fuel cell stack has been deactivated, adjust or rebalance proportions of power generated by each of the plurality of fuel cell stacks that remain operating after the first fuel cell stack has been deactivated, so that the remaining fuel cell stacks generate power in accordance the value of the requested power output. This may balance degradation among the fuel cell stacks of the fuel cell unit of the fuel cell system. Accordingly, the selective stack deactivation may be accompanied by adjusting proportions of power generated by each of the stacks that remain to be active and operating. The adjusting of the proportions of the power generated by each of the plurality of fuel cell stacks comprises rebalancing or redistributing the total power equally among the stack that are active and operating. A stack may be controlled to generate a certain amount of power by controlling mass flow rates of reactants, e.g., an air flow and a hydrogen gas flow, to that stack.

At **block 610,** the control system, responsive to determining that the value of the requested power output is above a second threshold power level that is greater than the first threshold power level and that the power demand on the fuel cell system increases, activates at least one second fuel cell stack from the plurality of fuel cell stacks in an order of decreasing SoH and in dependence on the value of the requested power output. The at least one second stack from the plurality of fuel cell stacks may be activated when at least one stack from the plurality of fuel cell stacks remains to be activated, i.e. the at least one stack is currently not active. Previously deactivated stacks may be activated such that stacks with a higher SoH are activated before stacks with a lower SoH are activated. One or more stacks may be activated simultaneously and/or one or more stacks may be activated sequentially. It should be noted that the at least one second stack is referred to herein as a second stack for description purposes only, to refer to any stack from the plurality of stacks that may be selected for activation. The at least one second stack may be the same stack that was previously deactivated, e.g., as described in connection with block 606.

In some examples, the control system may control the fuel cell unit and/or the fuel cell system to activate at least one second stack when the power demand on the fuel cell system increases, such as the power demand is increasing or is expected to increase for a certain period of time that may be longer than e.g. a threshold time period. The threshold time period may be selected such that, during a period of an increased power demand on the fuel cell system, it may be beneficial to activate at least one second fuel cell stack from the plurality of fuel cell stacks.

The control system may determine that the power demand on the fuel cell system increases using, e.g., a prediction such as a look-ahead functionality to determine that the power demand is increasing. The control system may be configured to determine that the power demand on the fuel cell system is currently increasing or about to increase. Stacks with higher SoH are activated before stacks with lower SoH. The stacks with lower SoH will remain deactivated until the currently active stacks need additional power support for fulfilling a current or expected power demand on the fuel cell system.

In some examples, the second threshold power level may be e.g., about 120kW or about 150kW, though the second threshold power level may have any other suitable value.

The second fuel cell stack may be activated by allowing an air flow to be supplied to the cathode of the first fuel cell stack, allowing a hydrogen gas flow to be supplied to the anode of the second fuel cell stack, and allowing a coolant flow to be circulated through the second fuel cell stack.

Thus, in some examples, the control system, e.g. its processing circuitry, may be configured to, responsive to determining that the value of the requested power output is above the second threshold power level and that the power demand on the fuel cell system increases, activate the second fuel cell stack by connecting the second fuel cell stack to the load, control a cathode feed line of the second fuel cell stack to supply an air flow to a cathode of the second fuel cell stack, control a cathode output line of the second fuel cell stack to provide a cathode output flow from the cathode of the second fuel cell stack, control an anode feed line of the second fuel cell stack to supply a hydrogen gas flow to an anode of the second fuel cell stack, control an anode output line of the second fuel cell stack to provide an anode output flow from the anode of the second fuel cell stack, control a coolant feed line of the second fuel cell stack to supply a coolant flow to the second fuel cell stack, and control a coolant output line of the second fuel cell stack to provide a coolant output flow from the first fuel cell stack.

At **block 612,** the control system may, after the at least one second fuel cell stack has been activated, adjust proportions of power generated by each of the at least one second fuel cell stack and/or by any other fuel cell stack from the plurality of stacks that is active. A stack is active when it has been activated and is operating to generate power in accordance with requirements of the fuel cell system i.e. in accordance with the value of the requested power output requested from the fuel cell system.

The proportions of the power may be adjusted so that each of the stacks that is active is controlled to generate equal or approximately equal amounts of power such that the total power requirement may be distributed among the operating stacks.

At **block 614,** the process may further comprise, responsive to determining that the value of the requested power output is above the first threshold power level and below the second threshold power level, determining at least one currently active fuel cell stack out of the plurality of fuel cell stacks.

At **block 616,** the process may further comprise, responsive to determining that the value of the requested power output is above the first threshold power level and below the second threshold power level, determining whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

The at least one third fuel cell stack and the at least one fourth fuel cell stack may be any of the fuel cell stacks out of the plurality of fuel cell stacks, and they are referred to herein as third and fourth only for description purposes. The at least one third stack may be any fuel cell stack that is currently deactivated and is not producing power, and the at least one fourth stack may be any fuel cell stack that is currently active and operating i.e. producing power.

In some examples, the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

At **block 618,** the method may comprise activating the at least one third fuel cell stack having a highest SoH among the plurality of fuel cell stacks, and deactivating the at least one fourth fuel cell stack having a lowest SoH among the plurality of fuel cell stacks. The at least one third fuel cell may be activated in accordance with examples of the present disclosure, and the at least one fourth fuel cell stack may similarly be activated in accordance with examples of the present disclosure.

The processing at blocks 614, 616, and 618 relates to scenarios when the value of the requested power output is above the first threshold power level and below the second threshold power level. In such scenarios, stacks may be activated and deactivated, depending on various factors. As a non-limiting example, the first threshold power level may be 60kW, and second threshold power level may be 300kW, and for requested power values in the 60kW-300kW range, stacks may be activated and deactivated, depending on various factors.

It should be noted that the specific order of the processing at blocks of FIG. 4A is shown as an example only, for illustration purposes, and that the processing may be performed in another suitable order.

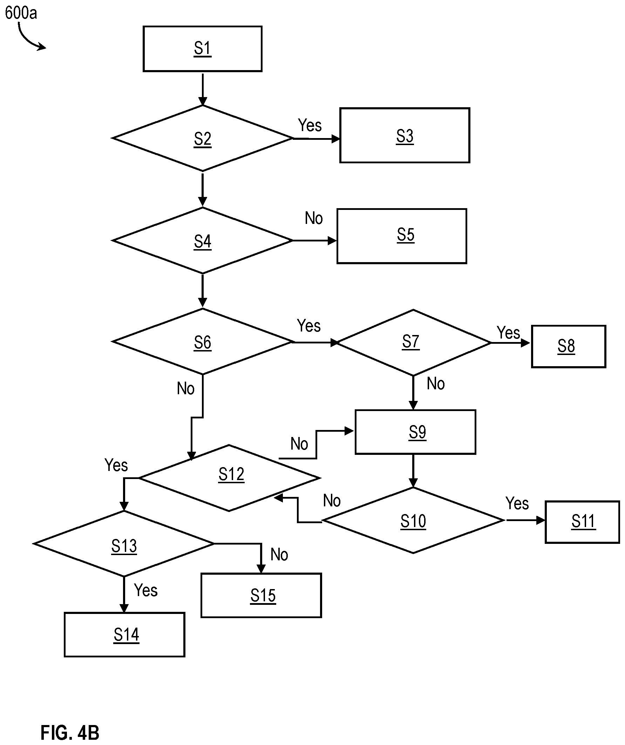

**FIG. 4B** illustrates an example of a process or method 600a for operating a fuel cell system in accordance with examples of the present disclosure. The method 600a is shown to illustrate in more detail how fuel cell stacks of a fuel cell unit may be activated and deactivated based on a value of requested power output that is requested, e.g., by a vehicle comprising the fuel cell system, from the fuel cell system. The requested power varies with the varied load on the fuel cell system, e.g., as the vehicle is driving along a route. The SoH of each of the stacks, including their efficiency or ability to produce a respective requested power, may be monitored, and used to determine whether to activate or deactivate a particular stack. A SoH of each of the fuel cell stacks of each fuel cell unit in a fuel cell system is monitored. Also, efficiency of each stack is monitored, individually or in a group e.g., efficiency of one, two, three, or more stacks, depending on a number of the stacks in a fuel cell unit. The efficiency of the stacks may be defined as a ratio of a produced power from the stacks divided by a fuel flow energy. Thus, as an example, as a fuel flow is measured and output power is measured, the efficiency may be calculated as follows: fuel_cell_power / (fuel_flow_rate * fuel_lower_heating_value). The efficiency at every fuel cell power output can be measured and is known. Thus, as an example, if 90kW of power is required from the fuel cell system, efficiency with which one stack can produce 90kW, efficiency with which two stacks can each produce 45kW, and efficiency with which three stacks can each produce 30kW may be known. Thus, it may be determined which operation will have the highest efficiency - one stack producing 90kW, two stacks producing 45kW or three stacks producing 30kW. In some examples, the efficiency of a stack may decrease as the produced power increases. The SoH of the stacks is used to determined which stacks to activate and deactivate, in accordance with examples of the present disclosure.

The process 600a may be performed by a suitable controller or control system, e.g., control system 30. The process 600a may be implemented in fuel cell system 20 (FIG. 2), fuel cell system 320 (FIGs. 3A and 3B), or in any other fuel cell system.

At **block S1,** the control system may obtain a value of requested power output that is requested from the fuel cell system that the vehicle is requesting from the fuel cell system.

At **block S2,** the control system may determine if the value of the requested power output is below a first threshold power level. The first threshold power level may be, for example, 60kW though other values may be used. The first power threshold may be selected such that, below that power level, no stacks may be activated and only stack deactivation may take place. This may occur in cases when the vehicle is slowing down before entering the idling mode. It should be noted however that, as discussed throughout this disclosure, in some circumstances two or more stacks may be swapped in operation as their SoH values are monitored, meaning that a stack with a lowest SoH may be deactivated and a stack with a highest SoH may be activated to operate instead of the stack with the lowest SoH.

At **block S3,** responsive to determining that the value of the requested power output is below the first threshold power level, the process 600a comprises deactivating at least one stack if more than a certain number of stacks, e.g., two or more, are currently active. In some cases, the stacks are deactivated until one stack remains active. In some cases, more than one stack remains active. If the requested power reduces further, remaining stacks may be deactivated until one stack remains active and operating. As at least one stack, with a lowest SoH, is deactivated, the load is rebalanced or redistributed among the stacks that remain to be active. The processing at block S3 may be similar to processing at blocks 606 and 610 of FIG. 4A.

At **block S4,** the control system may determine whether the value of the requested power output is above the first threshold power level and below the second threshold power level. The second threshold power level may be, for example, 300kW though other values may be used. The second threshold power level may be selected such that, above that power level, no stacks may be deactivated and only stack activation may take place. This may occur in cases e.g. when the vehicle is driving uphill and/or rapidly accelerating. In some circumstances, two or more stacks may be swapped in operation as their SoH values are monitored, such that a stack with a lowest SoH may be deactivated and a stack with a highest SoH may instead be activated.

At **block S5,** responsive to determining that the value of the requested power output is not above the first threshold power level and below the second threshold power level, i.e. that it is above the second threshold power level, the process 600a comprises activating at least one stack if fewer than a certain number of stacks, e.g., not all stacks of the fuel cell unit, are currently active. At least one stack, with a highest SoH, is activated, and the load is rebalanced or redistributed among the stacks are active. In some cases, the stacks are activated until all of the plurality of stacks are activated. For example, if the fuel cell unit comprises three stacks, all three stacks may be activated when the value of the requested power output is above the second threshold power level. In some cases, one or more stacks may remain inactive. If the requested power increases further, stacks that have been inactive may be activated. The processing at block S5 may be similar to processing at blocks 608 and 612 of FIG. 4A.

Further processing, at blocks S6-S15 of FIG. 4B, is an example of a more detailed explanation of the processing described in connection with blocks 614-618 of FIG. 4A. Thus, at least one stack that may be activated may be referred to as at least one third fuel cell stack having a highest SoH among the plurality of fuel cell stacks. At least one stack that may be deactivated may be referred to as at least one fourth fuel cell stack having a lowest SoH among the plurality of fuel cell stacks, more specifically, from currently active stacks.

At **block S6,** responsive to determining that the value of the requested power output is above the first threshold power level and below the second threshold power level, the control system may determine whether all of the plurality of stacks in the fuel cell unit are active. The value of the requested power output may be between the first and second threshold power levels, e.g, between 60kW and 300kW in some examples, and the power output may vary as the vehicle is operating. Stacks may be activated and deactivated in dependance on the required power output from the fuel cell system, a SoH of each of the stacks, and stacks' efficiency.

At **block S7,** responsive to determining that all of the plurality of stacks in the fuel cell unit are active, the control system may determine whether all of the plurality of stacks can operate at a higher efficiency than the stacks without at least one stack. In other words, it is determined whether, if one or more stacks are deactivated, the stacks that remain to be active can produce the required power with a higher efficiency than if all of the stacks included in the fuel cell unit remained to be active.

At **block S8,** responsive to determining that all of the plurality of stacks indeed can operate at the higher efficiency than the stacks without the at least one stack, all of the stacks may remain to be active and no stack may need to be deactivated at this point. Because it is determined that all of the plurality of stacks can generate the requested power with better efficiency than if one or more stacks are deactivated, e.g., there is no need to deactivate any stack, the load may be redistributed among the all of the stacks that are each active and operating.

At **block S9,** responsive to determining that all of the plurality of stacks indeed cannot operate at the higher efficiency than the stacks without the at least one stack, the at least one stack may be deactivated. Because it is determined that it is sufficient to keep less than all of the stacks active, the at least one stack having a lowest SoH may be deactivated.

At **block S10,** the control system may determine whether only one stack remains to be active. This processing step is shown for illustration purposes, to show that the process 600a may be performed continuously as the vehicle and the fuel cell are operating. A suitable number of the stacks may be operating at any given time.

At **block S11,**responsive to determining that only one stack remains to be active, the control system may control the fuel cell unit to operate using that stack. In examples herein, at least one stack may remain operating. In some cases, one stack may operate up to its maximum power. For example, in cases in which other stacks have low SoH, only one stack may remain to operate even if the fuel cell unit then operates at a lower efficiency in that case. In some examples, one stack may remain operating when the value of the requested power output is sufficiently low, e.g. close to the first power threshold level, so that one stack can meet the power requirements.

At **block S12**,responsive to determining that more than one stack remains to be active, the control system may determine whether the more than one stack, i.e. two or more stacks, can operate at a higher efficiency than these stacks without at least one stack. Similar to the processing at block S7, is determined whether, if one or more stacks are deactivated, the stacks that remain to be active can produce the required power with a higher efficiency than if all of the currently remained stacks remained to be active. This may be done to determine whether it is reasonable at this point to deactivate one or more stacks.

As shown in FIG. 4B, responsive determining, at block S12, that the currently active stacks cannot operate at the higher efficiency as compared to these stacks with at least one stack deactivated, the process 600a may follow to block S9 wherein the at least one stack may be deactivated. The at least one stack is selected based on its SoH i.e. it has a lowest SoH among the currently operating stacks.

At **block S13,** responsive determining, at block S12, that the currently active stacks cannot operate at the higher efficiency as compared to these stacks with at least one stack deactivated, the control system may determine whether the currently active stacks are the stacks having the highest SoH among all of the plurality of stacks in the fuel cell unit. It is in other words determined whether there is at least one another stack, which may not currently be active, that has a higher SoH than all of the currently active stacks.

At **block S14,** responsive to determining that the currently active stacks are the stacks having the highest SoH among all of the plurality of stacks in the fuel cell unit, the control system may control the fuel cell unit such that the currently active stacks remain to be operating and no stack may need to be deactivated at this point. The load may be redistributed among the currently active stacks.

At **block S15,** responsive to determining that the currently active stacks are not the stacks having the highest SoH among all of the plurality of stacks in the fuel cell unit, the control system may control the fuel cell unit such that the stack with the highest SoH is activated and a stack with a lowest SoH is deactivated. Once the stack with the highest SoH is activated and the stack with the lowest SoH is deactivated, the load may be redistributed among the currently active stacks.

It should be noted that the specific order of the processing at blocks of FIG. 4B is shown as an example only, and that the processing may be performed in another suitable order.

It should be appreciated that the process 600a may be executed continuously, as the vehicle is operating and values of the power requested to be output from the fuel cell system are obtained. Thus, as subsequent values of the power output are acquired, these values are compared to the threshold power levels and operation of the stacks is managed in accordance with examples of the present disclosure.

Furthermore, more than two threshold power levels may be used, for example, three threshold power levels or more. For example, in some cases, three threshold power levels may be used, a non-limiting example including threshold power levels of 60kW, 150kW, and 300kW. Depending on a number of fuel cell stacks in a fuel cell unit, a number of fuel cell units, and SoH and efficiency of each stack, stacks may be activated, or deactivated, or a decision may be made not to activate or deactivate any stacks at a certain time point. The fuel cell unit may be operating at what may be described as normal operating conditions when neither stack activation nor stack activation is needed. Nevertheless, the power request from the fuel cell system may vary, and a situation may change as the vehicle comprising the fuel cell system is traveling the route, at various locations and conditions.

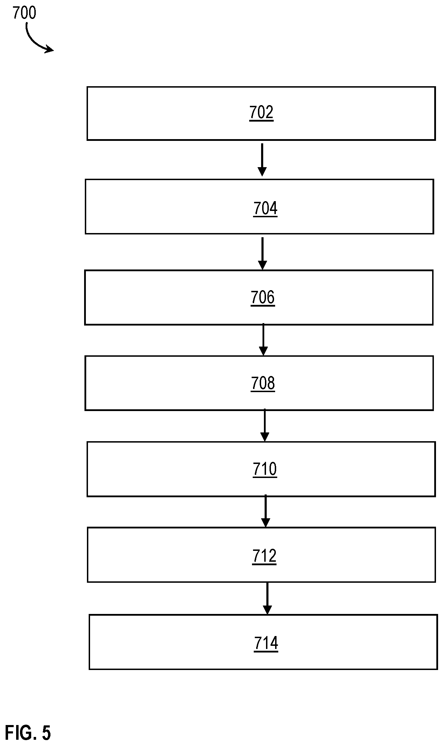

**FIG.** 5 illustrates a process or method 700 of operating a fuel cell system comprising a fuel cell unit that comprises a plurality of fuel cell stacks and an electrical circuit arranged to selectively connect the fuel cells stacks to a load. The fuel cell unit may be a single i.e. one fuel cell unit included in the fuel cell system. The method 700 is performed to selectively deactivate the stacks, and the method may be performed as part of the method 600 of FIG. 4. The fuel cell system is operated and controlled so as to maintain a voltage of each fuel cell of each fuel cell stack of the plurality of fuel cell stacks to remain below 0.8V. In other words, a voltage of every fuel cell, in every fuel cell stack of the fuel cell unit is maintained to be below 0.8V.

The method 700 may be performed by a control system such as e.g. control system 30. The control system 30 may be configured to control a suitable fuel cell system, e.g. fuel cell system 20 (FIG. 2), fuel cell system 320 (FIGs. 3A and 3B), or any other fuel cell system. The method 700 may be performed when all of the fuel cell stacks of the fuel cell unit are active and operating to produce power or energy. At a certain point in time of operation of the fuel cell system, e.g., when the vehicle is slowing down, one or more fuel cell stacks may be deactivated or shutdown. The method 700 may also be performed when some of the fuel cell stacks of the fuel cell unit are active and some of the fuel cell stacks of the fuel cell unit are deactivated.

At **block 702,** the control system obtains a value of requested power output that is requested from the fuel cell system. In some examples, the value of the requested power output may be a current value of the requested power output that is currently requested from the fuel cell system as it operates. In some examples, the value of the requested power output may be a predicted value. The actual or predicted value of requested power output may be obtained as discussed in connection with block 602 of FIG. 4.

At **block 704,** the control system monitors a SoH of each of the plurality of fuel cell stacks. The SoH of the fuel cell stack is defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack. Each of these parameters or features may alone or in combination with other one or more of the parameters be used to define a SoH of the stack.

At **block 706,** the control system selects at least one first fuel cell stack from the plurality of fuel cell stacks that has a lowest SoH among the plurality of fuel cell stacks. As used herein, the first fuel cell stack defines a stack that has been currently selected for deactivation.

At **block 708,** the control system, responsive determining that the value of the requested power output is below a first threshold power level, controls the electrical circuit so as to deactivate the first fuel cell stack by disconnecting the first fuel cell stack from the load. In some cases, the first fuel cell stack may comprise more than one stacks, e.g., two or more stacks.

The processing at block 708 may be performed as part of processing at block 606 of FIG. 4. Thus, the deactivation of the first fuel cell stack may involve controlling the fuel cell stack so that flows of reactants supplied for operation of the fuel cell stack are prevented from being provided to the first fuel cell stack. The flows of the reactants or media, such as an air flow, a hydrogen gas flow, and a coolant flow, may be diverted to bypass the stack being deactivated. In some examples, the flows of the reactants may be stopped or shut down, i.e. without being bypassed.

In some examples, the control system may control a cathode flow restriction valve in a cathode bypass line of the cathode feed line to maintain a mass flow rate of the air flow in the cathode bypass line within a first range. In some examples, the control system may control an anode flow restriction valve in an anode bypass line of the anode feed line to maintain a mass flow rate of the hydrogen gas flow in the anode bypass line within a second range. In some examples, the control system may control a coolant flow restriction valve in a coolant bypass line of the coolant feed line, to maintain a mass flow rate in the coolant bypass line within a third range. It may be useful to maintain the coolant flow through the coolant bypass line, as compared to completely shutting down the flow of the coolant through the stack. In particular, a temperature of the coolant, flown through the coolant bypass line, may be maintained at a level at which it may be easier to later activate the stack.

It should be noted that, as used herein, the first, second, and third ranges indicate that the mass flow rates of the respective reactants in the corresponding bypass lines are controlled so that the same pressures of the flows are maintained as when the flows were passing through the stack. For example, a mass flow rate of the air flow in the cathode bypass line may be controlled, e.g. by operating the cathode flow restriction valve, to remain within the same range, referred to herein as the first range, as would be maintained if the air flow were to be supplied to the fuel cell stack.

In some examples, as mentioned above, the air flow, the hydrogen gas flow, and the coolant flows are not diverted to be carried in corresponding bypass lines, but are rather shut down to stop them from flowing through the stack that is thereby being deactivated. Furthermore, in some implementations, bypass lines, e.g. as shown in FIGs. 2 and 3A-3B, may not be present.

At **block 710,** after the first fuel cell stack has been deactivated and responsive to the value of the requested power output being below at least one another threshold power level that is smaller than the first threshold power level, the control system may select at least one another fuel cell stack from the plurality of fuel cell stacks that has a next lowest SoH among the plurality of fuel cell stacks. In some examples, the at least one another threshold power level comprises two or more successively decreasing threshold power levels. Thus, as the value of the requested power output decreases, the control system may compare the value of the requested power output with several threshold power levels that are lower than the first threshold power level, and subsequent fuel cell stack(s), which remain operating after the first fuel cell stack has been deactivated, may also be deactivated. Depending on how quickly the power requested from the fuel cell system is reduced, the stacks may be deactivated one by one or in some cases two or more stacks may be deactivated simultaneously.

At **block 712,** the control system may control the electrical circuit to deactivate the at least one another fuel cell stack by disconnecting the second fuel cell stack from the load. Thus, as the value of the requested power output decreases further, one or more fuel cell stacks of the plurality of fuel cell stacks may be deactivated.

The at least one another fuel cell stack may comprise the one or more fuel cell stacks. The at least one another threshold power level may comprise two or more successively decreasing threshold power levels. The control system may control the electrical circuit to deactivate one or more fuel cell stacks of the at least one another fuel cell stack, in an order that is based on a corresponding increasing SoH of each of the one or more fuel cell stacks. Thus, the stacks with a lower SoH are deactivated before stacks with a higher SoH are deactivated.

Additionally, as mentioned above, two or more stacks may be deactivated simultaneously e.g. when the power demand on the fuel cell system decreases rapidly. In any case, if two or more stacks are deactivated sequentially, this is done in the order of the increasing SoH of the stacks, such that stacks with a lower SoH are deactivated before stacks with a higher SoH are deactivated.

At **block 714,** after the first fuel cell stack has been deactivated, the control system may adjust proportions of power generated by each of the plurality of fuel cell stacks that remain operating after the first fuel cell stack has been deactivated, so that the remaining fuel cell stacks generate power in accordance with the value of the power output that is requested from the fuel cell unit. The adjusting of the proportions of the power generated by each of the plurality of fuel cell stacks may comprise controlling the stacks so that each of the stacks generates an amount of power in accordance with the proportion, of the total power requested from the fuel cell system, assigned to that stack. In some examples, all of the stacks that remain to be operating are controlled to generate equal amounts of power so that the total power produced by the stacks meets the amount of power requested from the fuel cell system. It should be appreciated that the processing at block 710 may be performed after or simultaneously with the processing at block 712 and/or processing at block 714. Indeed, as further stacks are deactivated, the proportions of the amount of power that is generated by each of the stacks that remain to be activated may be adjusted among the stacks. The total amount of power requested from the fuel cell system may be redistributed among the operating stacks, so that, e.g., all of the stacks are controlled to generate equal or approximately equal amounts of power.

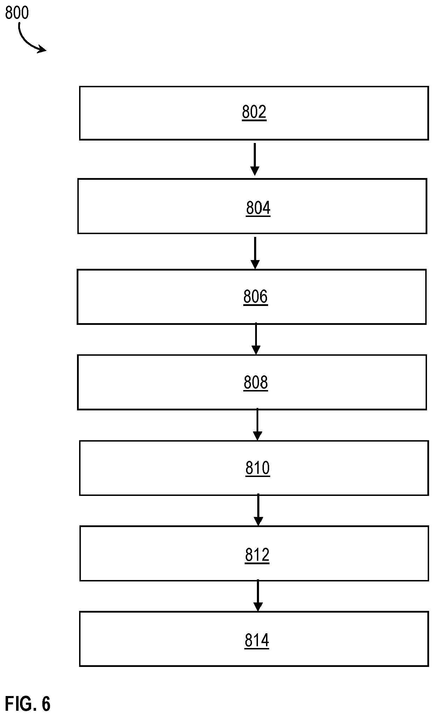

**FIG.** 6 illustrates a process or method 800 of operating a fuel cell system comprising a fuel cell unit that comprises a plurality of fuel cell stacks and an electrical circuit arranged to selectively connect the fuel cells stacks to a load. In some examples, the fuel cell unit may be a single i.e. one fuel cell unit included in the fuel cell system. The method 800 is performed to selectively activate the stacks, and the method 800 may be performed as part of the method 600 of FIG. 4. The fuel cell system is operated and controlled so as to maintain a voltage of each fuel cell of each fuel cell stack of the plurality of fuel cell stacks to remain below 0.8V.

The method 800 may be performed by a control system such as e.g. control system 30. The control system 30 may be configured to control a suitable fuel cell system, e.g. fuel cell system 20 (FIG. 2), fuel cell system 320 (FIGs. 3A and 3B), or any other fuel cell system. The method 800 may be performed when all of the fuel cell stacks of the fuel cell unit have been deactivated and are therefore inactive. At a certain point in time of operation of the fuel cell system, e.g., when the vehicle is starting up, one or more fuel cell stacks may be activated to produce energy. The method 800 may also be performed when some of the stacks are inactive and some of the stacks are active. In cases when, e.g., the vehicle's speed is increasing, one or more stacks that have remained to be inactive may be activated to generate more power for the vehicle.

At **block 802,** the control system obtains a value of requested power output that is requested from the fuel cell system. In some examples, the value of the requested power output may be a current value of the power output that is currently requested from the fuel cell system as it operates. In some examples, the value of the requested power output may be a predicted value. The actual or predicted value of requested power output may be obtained as discussed in connection with block 602 of FIG. 4.

At **block 804,** the control system monitors a SoH of each of the plurality of fuel cell stacks. The SoH of the fuel cell stack is defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack. Each of these parameters or features may alone or in combination with other one or more of the parameters be used to define a SoH of the stack.

At **block 806,** the control system selects at least one second fuel cell stack from the plurality of fuel cell stacks that has a highest SoH among the plurality of fuel cell stacks. As used herein, the second fuel cell stack defines a stack that has been currently selected for activation, and not to indicate any order. It is additionally noted that such fuel cell stack is referred to as second to differentiate from at least one first fuel cell stack that is selected for deactivation in accordance with aspects of the present disclosure e.g., at block 606 of FIG. 4A and/or the process 700 of FIG. 5.

At **block 808,** the control system, responsive determining that the value of the requested power output is above a second threshold power level, controls the electrical circuit so as to activate the at least one second fuel cell stack by connecting the second fuel cell stack to the load. In some cases, the at least one second fuel cell stack may comprise more than one stacks, e.g., two or more stacks. The at least one second fuel cell stack comprises a stack that has been previously deactivated, such that it may be activated to begin generating power.

Connecting the at least one second fuel cell stack to the load involves operating respective switches of electrical connections between that stack and the load, e.g., as described with reference to FIG. 3B. Also, if there are other stacks that are currently operating, the at least one second fuel cell stack is electrically coupled to these stacks, e.g. as also shown in the example of FIG. 3B.

The processing at block 808 may be performed as part of processing at block 610 of FIG. 4. Thus, the activation of the second fuel cell stack may involve controlling the second fuel cell stack so that flows of reactants or media, such as an air flow, a hydrogen gas flow, and a coolant flow, are supplied for operation of the second fuel cell stack. In implementations in which reactant bypasses are present such that respective flows are diverted to bypass a stack when it is deactivated, the flows may be caused to flow to the stack rather than through the bypasses when that stack is activated. In implementations in which the reactant flows are prevented from being supplied to the stack that is deactivated, e.g., without use of bypasses which may be absent, the reactant flows are caused to be supplied to the stack when that stack is activated.

In some examples, responsive to determining that the value of the power output is above the second threshold power level, the control system may control a cathode feed line of the second fuel cell stack to supply an air flow to a cathode of the second fuel cell stack, control a cathode output line of the second fuel cell stack to provide a cathode output flow from the cathode of the second fuel cell stack, control an anode feed line of the second fuel cell stack to supply a hydrogen gas flow to an anode of the second fuel cell stack, and control an anode output line of the second fuel cell stack to provide an anode output flow from the anode of the second fuel cell stack.

In some examples, responsive to determining that the value of the power output is above the second threshold power level, the control system may further control a coolant feed line of the second fuel cell stack to supply a coolant flow to the second fuel cell stack, and control a coolant output line of the second fuel cell stack to provide a coolant output flow from the second fuel cell stack.

Accordingly, the air flow, the hydrogen gas flow, and the coolant flow are supplied to the second fuel cell stacks as it is activated.

At **block 810,** the control system, after the second fuel cell stack has been activated and responsive to the value of the power output being above at least one another threshold power level that is greater than the second threshold power level, may select at least one another fuel cell stack from the plurality of fuel cell stacks that has a next highest SoH among the plurality of fuel cell stacks. The at least one another threshold power level may be a power level that is requested from the fuel cell system as the power demand on the fuel cell system increases.

In some examples, the at least one another threshold power level comprises two or more successively increasing threshold power levels.

At **block 812,** the control system may activate the at least one another fuel cell stack by connecting the another fuel cell stack to the load. The at least one another fuel cell stack may comprise more than one stack, and these stacks may be activated based on a corresponding decreasing SoH of each of the at least one another fuel cell stack. Thus, the stacks with a higher SoH are activated before the stacks with a lower SoH. More than one stack may be activated as a power demand on the fuel cell system increases.

At **block 814,** the control system, after the at least one second fuel cell stack has been activated, may adjust proportions of power generated by each of the at least one second fuel cell stack and/or by any other fuel cell stack from the plurality of stacks that is active. The proportions of the power may be adjusted so that fuel cell stacks from the plurality of fuel cell stacks that are active generate power in accordance with the value of the requested power output.

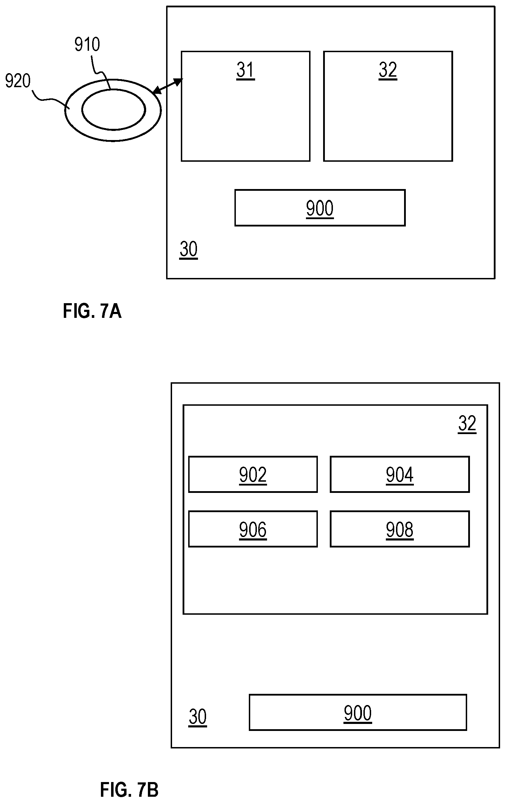

To perform the method steps described herein, the control system 30 may be configured to perform the processing described in connection with FIGs. 4, 5, and 6, and/or any other examples in accordance with the present disclosure. The control system 30 may, for example, comprise an arrangement as depicted in **FIGs. 7A** and 7B. The control system 30 may be positioned in any suitable location of the vehicle 10 or another system in which methods in accordance with aspects of the present disclosure are implemented. The control system 30 is described herein as part of the fuel cell system. However, in some examples, the control system 30 may be a remote control system or some of its functions may be performed in a remote control system.

As shown in **FIG. 7A****,** the control system 30 comprises processing circuitry 32, memory 31, and an input and output interface 900 configured to communicate with any necessary components and/or entities of examples herein. The input and output interface 900 may comprise a wireless and/or wired receiver and a wireless and/or wired transmitter. In some examples, the input and output interface 900 may comprise a wireless and/or wired transceiver. The control system 30 may use the input and output interface 900 to control and communicate with various sensors, actuators, subsystems, and/or interfaces of the fuel cell system and the vehicle 10, by using any one or more out of a Controller Area Network (CAN) bus, ethernet cables, Wi-Fi, Bluetooth, and/or other network interfaces.

The methods described herein may be implemented using processing circuitry, e.g., one or more processors, such as the processing circuitry 32 of the control system 30, together with computer program code stored in a computer-readable storage medium for performing the functions and actions of the examples herein.

The memory 31 may comprise one or more memory units. The memory 31 has stored thereon computer-executable instructions executable by the processing circuitry 32 of the control system 30. The memory 31 is configured to store, e.g., information, data, etc., and the computer-executable instructions to perform, when executed by the processing circuitry 32, the methods in accordance with examples herein. The control system 30 may additionally obtain information from an external memory.

The methods according to the aspects of the present disclosure may be implemented by e.g. a computer program product 910 or a computer program, comprising computer-executable instructions, i.e., software code portions, which, when executed by at least one processor, e.g., the processing circuitry 32, cause the at least one processor to carry out the actions described herein, as performed by the control system 30.

In some examples, the computer program product 910 is stored on a computer-readable storage medium 920. The computer-readable storage medium 920 may be, e.g., a disc, a universal serial bus (USB) stick, or similar device. The computer-readable storage medium 920, having stored thereon the computer program product, may comprise computer-executable instructions which, when executed by the processing circuitry 32, cause the processing circuitry 32 to perform the actions of the methods in accordance with examples of the present disclosure described herein, as performed by the control system 30.

As shown in **FIG. 7B****,** the control system 30 may comprise **an obtaining unit 902**. The control system 30, the processing circuitry 32, and/or the obtaining unit 902 are configured to obtain an actual or predicted value of requested power output requested from the fuel cell system. The value of the requested power output indicates a power demand from the fuel cell system during operation of the fuel cell vehicle or another power consumer in which the fuel cell system is deployed. The control system 30, the processing circuitry 32, and/or the obtaining unit **902** may be configured to determine the value of the requested power output of the fuel cell system. In some examples, the obtained value of the requested power output may be a predicted value of the requested power output of the fuel cell system. The value of the requested power output may be obtained as part of the processing shown at block 602 of FIG. 4A and/or as part of the processing shown at block 702 of FIG. 5 and/or as part of the processing shown at block 802 of FIG. 6.

In some examples, the value of the requested power output may be a predicted value of the requested power output that is expected to be requested from the fuel cell system. The value of the requested power output may be predicted using, e.g., features of a route that is being traveled by the vehicle including the fuel cell system, as well as other relevant features such as e.g. a current location of the vehicle, current and upcoming traffic conditions along the route, actual and/or predicted weather, and other features. For example, the control system may predict that the vehicle is approaching a portion of the route where a power demand on the fuel cell system will decrease, e.g., the vehicle will travel downhill, or the vehicle will stop for a certain duration of time, or another circumstances will cause the vehicle to operate such that the power output that is requested from the fuel cell system will decrease. The control system may also predict that the vehicle is approaching a portion of the route where a power demand on the fuel cell system will increase, e.g., the vehicle will travel uphill or the vehicle will start after it has been stopped, or another circumstances will cause the vehicle to operate such that the power output that is requested from the fuel cell system will decrease or increase.

The control system 30, the processing circuitry 32, and/or the obtaining unit 902 may be configured to obtain the actual or predicted value of requested power output that is requested from the fuel cell system continuously during operation of the fuel cell system, such that the control system 30 may be aware at any point in time what is a current or expected power demand on the fuel cell system.

In some examples, the control system 30 and/or the processing circuitry 32 may comprise a predicting unit, not separately shown herein, that is configured to predict or estimate the value of the requested power output, based on properties of the route that is being traveled by the vehicle and various other features.

In some examples, the fuel cell system may be included in a stationary application, and a value of the requested power output to be requested from the fuel cell system of the stationary application may be predicted using, e.g, data on prior history of operation of the stationary application and/or on other factors.

The control system 30 may comprise **a monitoring unit 904.** The control system 30, the processing circuitry 32, and/or the monitoring unit 904 are configured to monitor a SoH of each of the plurality of fuel cell stacks. The SoH of a fuel cell stack of the plurality of fuel cell stacks may be defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack. The control system 30, the processing circuitry 32, and/or the monitoring unit 904 may be configured to monitor a voltage level of each fuel cell stack of the fuel cell unit of the fuel cell system. The monitoring, by the control system 30, the processing circuitry 32, and/or the monitoring unit 904, may be performed as part of the processing shown at block 604 of FIG. 4A and/or as part of the processing shown at block 704 of FIG. 5 and/or as part of the processing shown at block 804 of FIG. 6.

As also shown in **FIG. 7B****,** the control system 30 may comprise **a determining unit 906.** The control system 30, the processing circuitry 32, and/or the determining unit 906 may be configured to determine whether or not the value of the requested power output is below a first threshold power level, and whether or not the value of the requested power output is above the first threshold power level. The comparison of the obtained value of the requested power output to the first threshold power level is used to determine whether to begin deactivating at least one fuel cell stack of the fuel cell unit, when the power demand from the fuel cell system decreases such that fewer fuel cell stacks may be able to fulfill requirements of the load, e.g., the fuel cell vehicle. The comparison of the obtained value of the requested power output to the first threshold power level is used to determine whether to begin activating at least one fuel cell stack of the fuel cell unit, when the power demand from the fuel cell system increases such that additional fuel cell stacks may be needed to operate to fulfill requirements of the load.

The control system 30 may comprise **a controlling unit 908**. The control system 30, the processing circuitry 32, and/or the controlling unit 908 may be configured to control operation of the fuel cell system so as to maintain a voltage of each fuel cell of each of the plurality of fuel cell stacks to remain below 0.8V.

The control system 30, the processing circuitry 32, and/or the controlling unit 908 are configured to, responsive to determining that the value of the requested power output is below a first threshold power level and that a power demand on the fuel cell system decreases, when at least two stacks out of the plurality of fuel cell stacks are currently active, deactivate at least one first fuel cell stack from the at least two currently active fuel cell stacks in an order of increasing SoH and in dependence on the value of the requested power output. If two stacks are currently active, one stack may be deactivated and one may remain to be active.

The deactivating the at least one first fuel cell stack in the order of increasing SoH indicates that a stack with a lower SoH is deactivated before a stack with a higher SoH is activated. The at least one first fuel cell stack may comprise more than one fuel cell stacks, and these stacks may be deactivated such that a stack with a lower SoH is deactivated before a stack with a higher SoH is deactivated. Thus, for example, a stack with a lowest SoH may be deactivated first, and a stack with a next lowest SoH may then be deactivated, etc. In cases in which the at least one first fuel cell stack comprises one fuel cell stack, this stack is deactivated before other stacks from the plurality of fuel cell stacks of the fuel cell unit are deactivated. As the obtained value of the requested power output decreases, further stacks from the plurality of fuel cell stacks may be deactivated, individually i.e. one-by-one or, in some cases, more than one stack at a time.

In some examples, the control system 30, the processing circuitry 32, and/or the controlling unit 908 may be configured to, responsive to determining that the value of the requested power output is below the first threshold power level, deactivate the first fuel cell stack by disconnecting the first fuel cell stack from the load, prevent a cathode feed line of the first fuel cell stack from supplying an air flow to a cathode of the first fuel cell stack, prevent a cathode output line of the first fuel cell stack from providing a cathode output flow from the cathode of the first fuel cell stack, prevent an anode feed line of the first fuel cell stack from supplying a hydrogen gas flow to an anode of the first fuel cell stack, prevent an anode output line of the first fuel cell stack from providing an anode output flow from the anode of the first fuel cell stack, prevent a coolant feed line of the first fuel cell stack from supplying a coolant flow to the first fuel cell stack, and prevent a coolant output line of the first fuel cell stack from providing a coolant output flow from the first fuel cell stack.

In some examples, the control system 30, the processing circuitry 32, and/or the controlling unit 908 may be configured to, prevent the cathode feed line of the first fuel cell stack from supplying the air flow to the cathode of the first fuel cell stack by diverting the air flow to pass through a cathode bypass line of the cathode of the first fuel cell stack, and prevent the anode feed line of the first fuel cell stack from supplying the hydrogen gas flow to the anode of the first fuel cell stack by diverting the hydrogen gas flow to pass through an anode bypass line of the anode of the first fuel cell stack. In some examples, the control system 30, the processing circuitry 32, and/or the controlling unit 908 may be configured to prevent the coolant feed line of the first fuel cell stack from supplying the coolant flow to the first fuel cell stack by diverting the coolant flow to pass through a coolant flow bypass line of the first fuel cell stack.

The control system 30, the processing circuitry 32, and/or the controlling unit 908 are also configured to, responsive to determining that the value of the requested power output is above a second threshold power level that is greater than the first threshold power level, activate at least one second stack from the plurality of fuel cell stacks in an order of decreasing SoH and in dependence on the value of the requested power output. The activating the at least one second stack in the order of decreasing SoH indicates that a stack with a higher SoH is activated before a stack with a lower SoH is activated. The at least one second stack may comprise more than one fuel cell stacks, and these stacks may be activated such that a stack with a higher SoH is activated before a stack with a lower SoH is activated. Thus, for example, a stack with a highest SoH may be activated first, when a stack with a next highest SoH may be activated, etc. In cases in which the at least one second stack comprises one fuel cell stack, this stack is activated before other stacks from the plurality of fuel cell stacks of the fuel cell unit are activated. As the obtained value of the requested power output increases, further stacks from the plurality of fuel cell stacks may be eactivated, individually i.e. one-by-one or, in some cases, more than one stack at a time.

In some examples, the control system 30, the processing circuitry 32, and/or the controlling unit 908 may be configured to, responsive to determining that the value of the requested power output is above the second threshold power level and that the power demand on the fuel cell system increases, activate the first fuel cell stack by connecting the first fuel cell stack to the load, control a cathode feed line of the first fuel cell stack to supply an air flow to a cathode of the first fuel cell stack, control a cathode output line of the first fuel cell stack to provide a cathode output flow from the cathode of the first fuel cell stack, control an anode feed line of the first fuel cell stack to supply a hydrogen gas flow to an anode of the first fuel cell stack, control an anode output line of the first fuel cell stack to provide an anode output flow from the anode of the first fuel cell stack, control a coolant feed line of the first fuel cell stack to supply a coolant flow to the first fuel cell stack, and control a coolant output line of the first fuel cell stack to provide a coolant output flow from the first fuel cell stack.

The deactivation of the stack in the order of increasing SoH of the stacks and the activation of the stack in the order of decreasing SoH of the stacks, in accordance with examples of the present disclosure, advantageously allow balancing degradation of the stacks in the fuel cell unit and thereby extending a lifetime of the fuel cell system. The stack with a lower or lowest SoH may be deactivated before stacks with a higher SoH because such stack may have fewer operating hours left, and deactivating this stack balances stack degradation among all stacks in the fuel cell unit because the stacks with the higher SoH remain operating longer. Similarly, the stack with a higher or highest SoH may be activated before stacks with a lower SoH because such stack may have more operating hours left, and activating this stack also balances stack degradation among all stacks in the fuel cell unit because the stack with the higher or highest SoH is controlled to operate for longer. Accordingly, such strategy may even out a duration of operation of each of the stacks and an impact on the stacks.

In some examples, the control system 30, the processing circuitry 32, and/or the controlling unit 908 may be configured to, after the at least one first fuel cell stack has been deactivated, adjust proportions of power generated by each of the plurality of fuel cell stacks that remain operating after the first fuel cell stack has been deactivated, so that the remaining fuel cell stacks generate power in accordance with the value of the requested power output. This processing is described e.g. in connection with block 608 of FIG. 4A and block 714 of FIG. 5.

In some examples, the control system 30, the processing circuitry 32, and/or the controlling unit 908 may be configured to, after the at least one second fuel cell stack has been activated, adjust proportions of power generated by each of the at least one second fuel cell stack and/or by any other fuel cell stack from the plurality of stacks that is active. This processing is described e.g. in connection with block 612 of FIG. 4A and block 814 of FIG. 6.

In some examples, the control system 30, the processing circuitry 32, and/or the determining unit 906 may be configured to determine whether the value of the requested power output is above the first threshold power level and below the second threshold power level. The control system 30, the processing circuitry 32, and/or the determining unit 906 may further be configured to, responsive to determining that the value of the requested power output is above the first threshold power level and below the second threshold power level, determine at least one currently active fuel cell stack out of the plurality of fuel cell stacks; and determine whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

In some examples, the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

In some examples, the control system 30, the processing circuitry 32, and/or the controlling unit 908 may be configured to activate the at least one third fuel cell stack having a highest SoH among the plurality of fuel cell stacks, and to deactivate the at least one fourth fuel cell stack having a lowest SoH among the plurality of fuel cell stacks.

In some examples, the control system 30, the processing circuitry 32, and/or the controlling unit 908 may be configured to perform various other acts shown e.g. in connection with FIGs. 4B, 5 and 6. The control system as shown in FIGs. 7A and 7B, is configured to perform various other acts shown e.g. in connection with FIG. 4B.

Those skilled in the art will appreciate that the units in the control system 30 described above may refer to a combination of analogue and digital circuits, and/or one or more processors configured with software and/or firmware, e.g., stored in the control system 30, that, when executed by the respective one or more processors, may perform the methods in accordance with embodiments of the present disclosure. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

**Examples pertaining to deactivating fuel cell stacks of a fuel cell unit of a fuel cell system.**

Example A1. A fuel cell system comprising:
a fuel cell unit that comprises a plurality of fuel cell stacks, a fuel cell stack from the plurality of fuel cell stacks comprising a cathode and an anode, a cathode feed line configured to supply an air flow to a cathode inlet of the cathode, an anode feed line configured to supply a hydrogen gas flow to an anode inlet of the anode, and a coolant feed line configured to supply a coolant flow to a coolant inlet of the fuel cell stack;
an electrical circuit arranged to selectively connect the fuel cells stacks to a load;
a control system comprising processing circuitry that is configured to:
   obtain a value of requested power output that is requested from the fuel cell system;
   monitor a State of Health, SoH, of each of the plurality of fuel cell stacks;
      select a first fuel cell stack from the plurality of fuel cell stacks that has a lowest SoH among the plurality of fuel cell stacks; and
      responsive to determining that the value of the requested power output is below a first threshold power level, control the electrical circuit so as to deactivate the first fuel cell stack by disconnecting the first fuel cell stack from the load.

Example A2. The fuel cell system of Example A1, wherein the processing circuitry of the control system is configured to, after the first fuel cell stack has been deactivated and responsive to determining that the value of the requested power output is below at least one another threshold power level that is smaller than the first threshold power level,
select at least one another fuel cell stack from the plurality of fuel cell stacks that has a next lowest SoH among the plurality of fuel cell stacks; and
control the electrical circuit to deactivate the at least one another fuel cell stack by disconnecting the another fuel cell stack from the load.

Example A3. The fuel cell system of Example A2, wherein:
the at least one another fuel cell stack comprises one or more fuel cell stacks, and
the processing circuitry of the control system is configured to control the electrical circuit to deactivate the one or more fuel cell stacks in an order that is based on a corresponding decreasing SoH of each of the one or more fuel cell stacks.

Example A4. The fuel cell system of any one of Examples A1 to A3, wherein the processing circuitry of the control system is configured to, after the first fuel cell stack has been deactivated, adjust proportions of power generated by each of the plurality of fuel cell stacks that remain operating after the first fuel cell stack has been deactivated, so that the remaining fuel cell stacks generate power in accordance with the value of the requested power output that is requested from the fuel cell unit.

Example A5. The fuel cell system of any one of Examples A1 to A4, further comprising:
a cathode bypass line of the cathode feed line, the cathode bypass line being configured to divert the air flow to bypass the cathode inlet; and
an anode bypass line of the anode feed line, the anode bypass line being configured to divert the hydrogen gas flow to bypass the anode inlet.

Example A6. The fuel cell system of Example A5, wherein:
the cathode bypass line comprises a cathode flow restriction valve configured to adjust a mass flow rate of the air flow in the cathode bypass line; and
the anode bypass line comprises an anode flow restriction valve configured to adjust a mass flow rate of the hydrogen gas flow in the anode bypass line.

Example A7. The fuel cell system of Example A6, wherein the processing circuitry of the control system is configured to:
control the cathode flow restriction valve to maintain the mass flow rate of the air flow in the cathode bypass line within a first range; and
control at least the anode flow restriction valve to maintain the mass flow rate of the hydrogen gas flow in the anode bypass line within a second range.

Example A8. The fuel cell system of any one of Examples A1 to A7, further comprising:
a coolant bypass line of the coolant feed line, the coolant bypass line being configured to divert the coolant flow to bypass the coolant inlet, wherein the coolant bypass line comprises a coolant flow restriction valve configured to adjust a flow rate of the coolant flow in the coolant bypass line.

Example A9. The fuel cell system of Example A8, wherein the processing circuitry of the control system is configured to control the coolant flow restriction valve to maintain a mass flow rate in the coolant bypass line within a third range.

Example A10. The fuel cell system of any one of Examples A1 to A9, wherein a SoH of a fuel cell stack of the plurality of fuel cell stacks is defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack.

Example A11. The fuel cell system of any one of Examples A1 to A10, wherein the processing circuitry of the control system is configured to control the fuel cell system so as to maintain a voltage of each fuel cell of each of the plurality of fuel cell stacks to remain below 0.8V.

Example A12. A fuel cell vehicle comprising a fuel cell system of any one of Examples A1 to A11.

Example A13. A method of operating a fuel cell system comprising a fuel cell unit that comprises a plurality of fuel cell stacks and an electrical circuit arranged to selectively connect the fuel cells stacks to a load, the method comprising:
obtain a value of requested power output that is requested from the fuel cell unit;
monitor a State of Health, SoH, of each of the plurality of fuel cell stacks;
select a first fuel cell stack from the plurality of fuel cell stacks that has a lowest SoH among the plurality of fuel cell stacks; and
responsive to the value of the requested power output being below a first threshold power level, control an electrical circuit so as to deactivate the first fuel cell stack by disconnecting the first fuel cell stack from the load.

Example A14. The method of Example A13, comprising, after the first fuel cell stack has been deactivated and responsive to the value of the requested power output being below at least one another threshold power level that is smaller than the first threshold power level,
selecting at least one another fuel cell stack from the plurality of fuel cell stacks that has a next lowest SoH among the plurality of fuel cell stacks; and
controlling the electrical circuit to deactivate the at least one another fuel cell stack by disconnecting the first fuel cell stack from the load.

Example A15. The method of Example A14, wherein the at least one another fuel cell stack comprises one or more fuel cell stacks, and the method comprises controlling the electrical circuit to deactivate the one or more fuel cell stacks in an order that is based on a corresponding decreasing SoH of each of the one or more fuel cell stacks.

Example A16. The method of any one of Examples A13 to A15, comprising, after the first fuel cell stack has been deactivated, adjusting proportions of power generated by each of the plurality of fuel cell stacks that remain operating after the first fuel cell stack has been deactivated, so that the remaining fuel cell stacks generate power in accordance with the value of the requested power output that is requested from the fuel cell unit.

Example A17. The method of any one of Examples A13 to A16, comprising controlling the electrical circuit so as to maintain a voltage of each of the plurality of fuel cell stacks to remain below 0.8V.

Example A18. A control system for controlling a fuel cell system of a fuel cell vehicle, the control system being configured to perform the method of any one of Examples A13 to A17.

Example A19. A computer program product comprising instructions, which, when executed by at least one processor, cause the at least one processor to perform the method of any one of Examples A13 to A17.

Example A20. A computer-readable storage medium, having stored thereon a computer program product comprising instructions which, when executed by at least one processor, cause the at least one processor to perform the method of any one of Examples A13 to A17.

**Examples pertaining to activating fuel cell stacks of a fuel cell unit of a fuel cell system.**

Example B1. A fuel cell system for a fuel cell vehicle, the fuel cell system comprising:
a fuel cell unit that comprises a plurality of fuel cell stacks, a fuel cell stack from the plurality of fuel cell stacks comprising a cathode and an anode, a cathode feed line configured to supply an air flow to the cathode, a cathode output line configured to provide a cathode output flow from the cathode, an anode feed line configured to supply a hydrogen gas flow to the anode, an anode output line configured to provide an anode output flow from the anode, a coolant feed line configured to supply a coolant flow to the fuel cell stack, and a coolant output line configured to provide a coolant output flow from the fuel cell stack;
an electrical circuit arranged to selectively connect the fuel cells stacks to a load, wherein the fuel cell stack is configured to be electrically coupled to all other fuel cell stacks from the plurality of fuel cell stacks;
a control system configured to control operation of the fuel cell unit and comprising processing circuitry that is configured to:
   obtain an actual or predicted value of requested power output that is requested from the fuel cell system;
   monitor a State of Health, SoH, of each of the plurality of fuel cell stacks;
select at least one second fuel cell stack from the plurality of fuel cell stacks that has a highest SoH among the plurality of fuel cell stacks; and
   responsive to determining that the value of the requested power output is above a second threshold power level, activate the second fuel cell stack by connecting the second fuel cell stack to the load.

Example B2. The fuel cell system of Example B1, wherein the processing circuitry of the control system is configured to, after the second fuel cell stack has been activated and responsive to the value of the requested power output being above at least one another threshold power level that is greater than the second threshold power level,
select at least one another fuel cell stack from the plurality of fuel cell stacks that has a next highest SoH among the plurality of fuel cell stacks; and
activate the at least one another fuel cell stack by connecting the another fuel cell stack to the load.

Example B3. The fuel cell system of Example B2, wherein the at least one another fuel cell stack comprises one or more fuel cell stacks, and the processing circuitry of the control system is configured to activate the one or more fuel cell stacks in an order that is based on a corresponding decreasing SoH of each of the one or more fuel cell stacks.

Example B4. The fuel cell system of any one of Examples B1 to B3, wherein the processing circuitry of the control system is configured to, after the second fuel cell stack has been activated, adjust proportions of power generated by each of the at least one second fuel cell stack and/or by any other fuel cell stack from the plurality of stacks that is active, so that fuel cell stacks from the plurality of fuel cell stacks that are active generate power in accordance with the value of the requested power output.

Example B5. The fuel cell system of any one of Examples B1 to B4, wherein the processing circuitry of the control system is configured to, responsive to determining that the value of the requested power output is above the second threshold power level,
control a cathode feed line of the second fuel cell stack to supply an air flow to a cathode of the second fuel cell stack,
control a cathode output line of the second fuel cell stack to provide a cathode output flow from the cathode of the second fuel cell stack,
control an anode feed line of the second fuel cell stack to supply a hydrogen gas flow to an anode of the second fuel cell stack, and
control an anode output line of the second fuel cell stack to provide an anode output flow from the anode of the second fuel cell stack.

Example B6. The fuel cell system of any one of Examples B1 to B5, wherein the processing circuitry of the control system is configured to, responsive to determining that the value of the requested power output is above the second threshold power level,
control a coolant feed line of the second fuel cell stack to supply a coolant flow to the second fuel cell stack, and
control a coolant output line of the second fuel cell stack to provide a coolant output flow from the second fuel cell stack.

Example B7. The fuel cell system of any one of Examples B1 to B6, wherein the value of the requested power output is predicted based on properties of a route traveled by the fuel cell vehicle.

Example B8. The fuel cell system of any one of Examples B1 to B7, wherein a SoH of a fuel cell stack of the plurality of fuel cell stacks is defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack.

Example B9. The fuel cell system of any one of Examples B1 to B8, wherein the processing circuitry of the control system is configured to control operation of the fuel cell system so as to maintain a voltage of each fuel cell of each of the plurality of fuel cell stacks to remain below 0.8V.

Example B10. A fuel cell vehicle comprising a fuel cell system of any one of Examples B1 to B9.

Example B11. A method of operating a fuel cell system comprising a fuel cell unit that comprises a plurality of fuel cell stacks and an electrical circuit arranged to selectively connect the fuel cells stacks to a load, the method comprising:
obtaining an actual or predicted value of requested power output that is requested from the fuel cell system;
monitoring a State of Health, SoH, of each of the plurality of fuel cell stacks;
selecting at least one second fuel cell stack from the plurality of fuel cell stacks that has a highest SoH among the plurality of fuel cell stacks; and
responsive to determining that the value of the requested power output is above a second threshold power level, activating the at least one second fuel cell stack by connecting the second fuel cell stack to the load.

Example B12. The method of Example B11, comprising, after the second fuel cell stack has been activated and responsive to the value of the requested power output being above at least one another threshold power level that is greater than the second threshold power level,
selecting at least one another fuel cell stack from the plurality of fuel cell stacks that has a next highest SoH among the plurality of fuel cell stacks; and
activating the at least one another fuel cell stack by connecting the another fuel cell stack to the load, wherein the at least one another fuel cell stack is activated based on a corresponding decreasing SoH of each of the at least one another fuel cell stack.

Example B13. The method of Example B11 or B12, comprising, after the at least one second fuel cell stack has been activated, adjusting proportions of power generated by each of the at least one second fuel cell stack and/or by any other fuel cell stack from the plurality of stacks that is active, so that fuel cell stacks from the plurality of fuel cell stacks that are active generate power in accordance with the value of the requested power output.

Example B14. The method of any one of Examples B11 to B13, comprising, responsive to determining that the value of the requested power output is above the second threshold power level,
controlling a cathode feed line of the second fuel cell stack to supply an air flow to a cathode of the second fuel cell stack,
controlling a cathode output line of the second fuel cell stack to provide a cathode output flow from the cathode of the second fuel cell stack,
controlling an anode feed line of the second fuel cell stack to supply a hydrogen gas flow to an anode of the second fuel cell stack, and
controlling an anode output line of the second fuel cell stack to provide an anode output flow from the anode of the second fuel cell stack.

Example B15. The method of any one of Examples B11 to B14, comprising, responsive to determining that the value of the requested power output is above the second threshold power level,
controlling a coolant feed line of the second fuel cell stack to supply a coolant flow to the second fuel cell stack, and
controlling a coolant output line of the second fuel cell stack to provide a coolant output flow from the second fuel cell stack.

Example B16. The method of any one of Examples B11 to B15, wherein the value of the requested power output is predicted based on properties of a route traveled by the fuel cell vehicle.

Example B17. A control system for controlling a fuel cell system of a fuel cell vehicle, the control system being configured to perform the method of any one of Examples B11 to B16.

Example B18. A computer program product comprising instructions, which, when executed by at least one processor, cause the at least one processor to perform the method of any one of Examples B11 to B16.

Example B19. A computer-readable storage medium, having stored thereon a computer program product comprising instructions which, when executed by at least one processor, cause the at least one processor to perform the method of any one of Examples B11 to B16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A fuel cell system (20, 320) for a fuel cell vehicle (10), the fuel cell system comprising:
a fuel cell unit (21, 321) that comprises a plurality of fuel cell stacks (22, 322, 422, 522), a fuel cell stack (22) from the plurality of fuel cell stacks comprising a cathode (26) and an anode (24), a cathode feed line (46) configured to supply an air flow to the cathode, a cathode output line (48) configured to provide a cathode output flow from the cathode, an anode feed line (34) configured to supply a hydrogen gas flow to the anode, an anode output line (36) configured to provide an anode output flow from the anode, a coolant feed line (58) configured to supply a coolant flow to the fuel cell stack, and a coolant output line (60) configured to provide a coolant output flow from the fuel cell stack;
an electrical circuit (325) arranged to selectively connect the fuel cells stacks to a load, wherein the fuel cell stack is configured to be electrically coupled to all other fuel cell stacks from the plurality of fuel cell stacks;
a control system (30) configured to control operation of the fuel cell unit and comprising processing circuitry (32) that is configured to:
obtain an actual or predicted value of requested power output that is requested from the fuel cell system;
monitor a State of Health, SoH, of each of the plurality of fuel cell stacks;
responsive to determining that the value of the power output is below a first threshold power level and that a power demand on the fuel cell system decreases, when at least two fuel cell stacks out of the plurality of stacks are currently active, deactivate at least one first fuel cell stack from the at least two currently active fuel cell stacks in an order of increasing SoH and in dependence on the value of the requested power output; and
responsive to determining that the value of the requested power output is above a second threshold power level that is greater than the first threshold power level, and that the power demand on the fuel cell system increases, activate at least one second fuel cell stack from the plurality of fuel cell stacks in an order of decreasing SoH and in dependence on the value of the requested power output.

2. The fuel cell system of claim 1, wherein the processing circuitry of the control system is configured to, after the at least one first fuel cell stack has been deactivated, adjust proportions of power generated by each of the plurality of fuel cell stacks that remain operating after the first fuel cell stack has been deactivated, so that the remaining fuel cell stacks generate power in accordance with the value of the requested power output.

3. The fuel cell system of claim 1 or 2, wherein the processing circuitry of the control system is configured to, after the at least one second fuel cell stack has been activated, adjust proportions of power generated by each of the at least one second fuel cell stack and/or by any other fuel cell stack from the plurality of stacks that is active, so that fuel cell stacks from the plurality of fuel cell stacks that are active generate power in accordance with the value of the requested power output.

4. The fuel cell system of any one of claims 1 to 3, wherein the processing circuitry of the control system is configured to, responsive to determining that the value of the requested power output is above the first threshold power level and below the second threshold power level:
determine at least one currently active fuel cell stack out of the plurality of fuel cell stacks; and
determine whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

5. The fuel cell system of claim 4, wherein the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

6. The fuel cell system of claim 4 or 5, wherein the processing circuitry of the control system is configured to activate the at least one third fuel cell stack having a highest SoH among the plurality of fuel cell stacks, and to deactivate the at least one fourth fuel cell stack having a lowest SoH among the plurality of fuel cell stacks.

7. The fuel cell system of any one of claims 1 to 6, wherein the value of the requested power output is predicted based on properties of a route traveled by the fuel cell vehicle.

8. The fuel cell system of any one of claims 1 to 7, wherein a SoH of a fuel cell stack of the plurality of fuel cell stacks is defined as one or more of a voltage level of the fuel cell stack at a certain current, a difference between the voltage level of the fuel cell stack and a reference voltage at the certain current, a number of operating hours of the fuel cell stack, and a number of start/stop events for the fuel cell stack.

9. The fuel cell system of any one of claims 1 to 8, wherein the processing circuitry of the control system is configured to control operation of the fuel cell system so as to maintain a voltage of each fuel cell of each of the plurality of fuel cell stacks to remain below 0.8V.

10. A fuel cell vehicle comprising a fuel cell system of any one of claims 1 to 9.

11. A method (600) of operating a fuel cell system comprising a fuel cell unit that comprises a plurality of fuel cell stacks and an electrical circuit arranged to selectively connect the fuel cells stacks to a load, the method comprising:
obtaining (602) an actual or predicted value of requested power output that is requested from the fuel cell system;
monitoring (604) a State of Health, SoH, of each of the plurality of fuel cell stacks;
responsive to determining that the value of the requested power output is below a first threshold power level and that a power demand on the fuel cell system decreases, when at least two fuel cell stacks out of the plurality of stacks are currently active, deactivating (606) at least one first fuel cell stack from the at least two currently active fuel cell stacks in an order of increasing SoH and in dependence on the value of the requested power output; and
responsive to determining that the value of the requested power output is above a second threshold power level that is greater than the first threshold power level, and that the power demand on the fuel cell system increases, activating (608) at least one second stack from the plurality of fuel cell stacks in an order of decreasing SoH and in dependence on the value of the requested power output.

12. The method of claim 11, wherein the method comprises, after the at least one first fuel cell stack has been deactivated, adjusting (610) proportions of power generated by each of the plurality of fuel cell stacks that remain operating after the first fuel cell stack has been deactivated, so that the remaining fuel cell stacks generate power in accordance with the value of the requested power output.

13. The method of claim 11 or 12, wherein the method comprises, after the at least one second fuel cell stack has been activated, adjusting (612) proportions of power generated by each of the at least one second fuel cell stack and/or by any other fuel cell stack from the plurality of stacks that is active.

14. The method of any one of claims 11 to 13, comprising, responsive to determining that the value of the requested power output is above the first threshold power level and below the second threshold power level:
determining (614) at least one currently active fuel cell stack out of the plurality of fuel cell stacks; and
determining (616) whether to activate at least one third fuel cell stack out of the plurality of fuel cell stacks and whether to deactivate at least one fourth fuel cell stack out of the at least one currently active fuel cell stack, wherein the determining is performed based on a number of fuel cell stacks required to produce the required amount of power, on the at least one currently active fuel cell stack, and based on a SoH of each of the plurality of fuel cell stacks.

15. The method of claim 14, wherein the determining whether to activate the at least one third fuel cell stack out of the plurality of fuel cell stacks and whether to deactivate the at least one fourth fuel cell stack out of the plurality of fuel cell stacks is further based on an efficiency of the plurality of fuel cell stacks, individually or in a group, with which the number of fuel cell stacks required to produce the required amount of power are capable of producing the required amount of power.

16. The method of claim 14 or 15, comprising (618) activating the at least one third fuel cell stack having a highest SoH among the plurality of fuel cell stacks, and deactivate the at least one fourth fuel cell stack having a lowest SoH among the plurality of fuel cell stacks.

17. A control system for controlling a fuel cell system of a fuel cell vehicle, the control system being configured to perform the method of any one of claims 11 to 16.
